(19) Europäisches Patentamt
European Patent Office
Office européen des brevets

(11) **EP 4 092 783 A1**

(12) **EUROPEAN PATENT APPLICATION**
published in accordance with Art. 153(4) EPC

(43) Date of publication:
**23.11.2022 Bulletin 2022/47**

(21) Application number: **21741613.0**

(22) Date of filing: **15.01.2021**

(51) International Patent Classification (IPC):
$H01M\ 4/131$ (2010.01)   $H01M\ 4/36$ (2006.01)
$H01M\ 4/505$ (2010.01)   $H01M\ 4/525$ (2010.01)
$H01M\ 10/052$ (2010.01)   $H01M\ 10/0562$ (2010.01)

(52) Cooperative Patent Classification (CPC):
H01M 4/131; H01M 4/36; H01M 4/485;
H01M 4/505; H01M 4/525; H01M 10/052;
H01M 10/0562; Y02E 60/10; Y02P 70/50

(86) International application number:
**PCT/JP2021/001219**

(87) International publication number:
**WO 2021/145420 (22.07.2021 Gazette 2021/29)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **17.01.2020 JP 2020006341**

(71) Applicant: **SUMITOMO CHEMICAL COMPANY, LIMITED**
**Tokyo 103-6020 (JP)**

(72) Inventors:
• **KADOWAKI, Takuya**
**Niihama-shi, Ehime 792-8521 (JP)**
• **KAGEURA, Jun-ichi**
**Niihama-shi, Ehime 792-8521 (JP)**
• **MURAKAMI, Chikara**
**Niihama-shi, Ehime 792-8521 (JP)**

(74) Representative: **Vossius & Partner Patentanwälte Rechtsanwälte mbB**
**Siebertstraße 3**
**81675 München (DE)**

(54) **POSITIVE ELECTRODE ACTIVE MATERIAL FOR ALL-SOLID-STATE LITHIUM ION BATTERY, ELECTRODE, AND ALL-SOLID-STATE LITHIUM ION BATTERY**

(57) What is claimed is a positive electrode active material for an all-solid-state lithium-ion battery composed of particles containing crystals of a lithium metal composite oxide,
wherein the lithium metal composite oxide has a layered structure and contains at least Li and a transition metal, and wherein, in the particles, in pore physical properties obtained from nitrogen adsorption isotherm measurement and nitrogen desorption isotherm measurement at a liquid nitrogen temperature, the total pore volume obtained from a nitrogen adsorption amount when the relative pressure ($p/p_0$) of an adsorption isotherm is 0.99 is less than 0.0035 $cm^3/g$.

FIG. 1

EP 4 092 783 A1

**Description**

**[Technical** Field]

The present invention relates to a positive electrode active material for an all-solid-state lithium-ion battery, an electrode and an all-solid-state lithium-ion battery.
Priority is claimed on Japanese Patent Application No. 2020-006341, filed January 17, 2020, the content of which is incorporated herein by reference.

[Background Art]

Research on lithium-ion secondary batteries is active for applications such as drive power supplies of electric vehicles and household storage batteries. Among these, the all-solid-state lithium-ion secondary battery has advantages such as a high energy density, a wide operation temperature range, and resistance to deterioration, as compared with a conventional lithium-ion secondary battery using an electrolytic solution. Therefore, the all-solid-state lithium-ion secondary battery is being focused on as a next-generation energy storage device.
In the following description, the "conventional lithium-ion secondary battery using an electrolytic solution" may be referred to as a "liquid-based lithium-ion secondary battery" in order to distinguish it from an all-solid-state lithium-ion secondary battery.
Patent Document 1 describes an all-solid-state lithium-ion secondary battery using $LiNi_{1/3}Mn_{1/3}Co_{1/3}O_2$ as a positive electrode active material. $LiNi_{1/3}Mn_{1/3}Co_{1/3}O_2$ is a well-known material as a positive electrode active material for a liquid-based lithium-ion secondary battery.

[Citation List]

[Patent Literature]

[Patent Document 1]
JP-A-2018-014317

[Summary of Invention]

[Technical Problem]

In the study of all-solid-state lithium-ion secondary batteries, the findings of studies on conventional liquid-based lithium-ion secondary batteries may not be utilized. Therefore, there is a need for specific studies on all-solid-state lithium-ion secondary batteries.
Incidentally, in an all-solid-state lithium-ion secondary battery, overcharge or overvoltage due to the internal resistance of the battery becomes a problem. There is a phenomenon in which the voltage rises after initial charging starts with overcharging or overvoltage. When the internal resistance of the battery is larger, the voltage rises after initial charging starts. The voltage rises in the battery, and the charging capacity decreases. When the charging capacity decreases, the discharging capacity of the battery also decreases. In order to charge a predetermined electric capacitance in this state, the state becomes an overcharged state or an overvoltage state, and the lifespan of the battery is shortened.
The present invention has been made in view of such circumstances, and an object of the present invention is to provide a positive electrode active material for an all-solid-state lithium-ion battery that can reduce a voltage rise after initial charging starts. In addition, another object of the present invention is to provide an electrode having such a positive electrode active material for an all-solid-state lithium-ion battery and an all-solid-state lithium-ion battery.

[Solution to Problem]

In order to address the above problems, the present invention includes the following aspects.
[1] A positive electrode active material for an all-solid-state lithium-ion battery composed of particles containing crystals of a lithium metal composite oxide,

wherein the lithium metal composite oxide has a layered structure and contains at least Li and a transition metal, and

wherein, in pore physical properties obtained from nitrogen adsorption isotherm measurement and nitrogen desorption isotherm measurement at a liquid nitrogen temperature, a total pore volume obtained from a nitrogen adsorption amount when the relative pressure (p/po) of an adsorption isotherm is 0.99 is less than 0.0035 cm$^3$/g.

[2] The positive electrode active material for an all-solid-state lithium-ion battery according to [1], which is used for an all-solid-state lithium-ion battery containing an oxide-based solid electrolyte.

[3] The positive electrode active material for an all-solid-state lithium-ion battery according to [1] or [2], wherein, in a pore distribution obtained from a desorption isotherm by a Barrett-Joyner-Halenda (BJH) method, a proportion of the volume of pores having a pore diameter of 50 nm or less with respect to a total pore volume of pores having a pore diameter of 200 nm or less is 45% or more.

[4] The positive electrode active material for an all-solid-state lithium-ion battery according to any one of [1] to [3], wherein, in a cumulative pore distribution curve obtained by a mercury intrusion porosimetry, the pore diameter **$D_{75}$ at a cumulative 25% is 7.4 μm or less, and** the pore diameter **$D_5$ at a cumulative 95% is 0.0135 μm or more.**

[5] The positive electrode active material for an all-solid-state lithium-ion battery according to any one of [1] to [4], wherein the transition metal is at least one element selected from the group consisting of Ni, Co, Mn, Ti, Fe, V and W.

[6] The positive electrode active material for an all-solid-state lithium-ion battery according to [5], wherein the lithium metal composite oxide is represented by the following Composition Formula (A):

$$Li[Li_x(Ni_{(1-y-z-w)}Co_yMn_zM_w)_{1-x}]O_2 \qquad \text{Composition Formula (A)}$$

(where, M is at least one element selected from the group consisting of Fe, Cu, Ti, Mg, Al, W, B, Mo, Nb, Zn, Sn, Zr, Ga and V, and $-0.10 \leq x \leq 0.30$, $0 \leq y \leq 0.40$, $0 \leq z \leq 0.40$, $0 \leq w \leq 0.10$, and $0 < y+z+w$ are satisfied).

[7] The positive electrode active material for an all-solid-state lithium-ion battery according to [6], wherein, in Composition Formula (A), $1-y-z-w \geq 0.50$ and $y \leq 0.30$ are satisfied.

[8] The positive electrode active material for an all-solid-state lithium-ion battery according to any one of [1] to [7], wherein the particles are composed of primary particles, secondary particles which are aggregates of the primary particles, and single particles that exist independently of the primary particles and the secondary particles, and wherein the amount of the single particles in the particles is 20% or more.

[9] An electrode including the positive electrode active material for an all-solid-state lithium-ion battery according to any one of [1] to [8].

[10] The electrode according to [9], further including a solid electrolyte.

[11] An all-solid-state lithium-ion battery including a positive electrode, a negative electrode, and a solid electrolyte layer interposed between the positive electrode and the negative electrode,

wherein the solid electrolyte layer contains a first solid electrolyte,
wherein the positive electrode has a positive electrode active material layer in contact with the solid electrolyte layer and a current collector on which the positive electrode active material layer is laminated, and
wherein the positive electrode active material layer contains the positive electrode active material for an all-solid-state lithium-ion battery according to any one of [1] to [8].

[12] The all-solid-state lithium-ion battery according to [11], wherein the positive electrode active material layer contains the positive electrode active material for an all-solid-state lithium-ion battery and a second solid electrolyte.

[13] The all-solid-state lithium-ion battery according to [12], wherein the first solid electrolyte and the second solid electrolyte are the same substance.

[14] The all-solid-state lithium-ion battery according to any one of [11] to [13], wherein the first solid electrolyte has an amorphous structure.

[15] The all-solid-state lithium-ion battery according to any one of [11] to [14], wherein the first solid electrolyte is an oxide-based solid electrolyte.

[Advantageous Effects of Invention]

**According to the present invention, it is possible to provide a positive electrode active material for an all-solid-state lithium-ion battery that can reduce an increase in voltage after initial charging starts. In addition, it is possible to provide an electrode containing such a positive electrode active material for an all-solid-state lithium-ion battery and an all-solid-state lithium-ion battery.**

**[Brief Description of Drawings]**

Fig. 1 is a schematic view showing a laminate included in an all-solid-state lithium-ion battery of an embodiment.
**Fig. 2 is a schematic view showing an overall structure of the all-solid-state lithium-ion battery of the embodiment.**

**[Description of Embodiments]**

<Positive electrode active material for all-solid-state lithium-ion battery>

When the surface of lithium metal composite oxide particles has a coating layer composed of a metal composite oxide to be described below, particles having a coating layer correspond to **"particles containing crystals of a lithium metal composite oxide"** according to one aspect of the present invention.

In addition, when the surface of lithium metal composite oxide particles does not have a coating layer composed of a metal composite oxide, the lithium metal composite oxide corresponds to **"particles containing crystals of a lithium metal composite oxide"** according to one aspect of the present invention.

The positive electrode active material for an all-solid-state lithium-ion battery of the present embodiment is composed of particles containing crystals of a lithium metal composite oxide. The positive electrode active material for an all-solid-state lithium-ion battery of the present embodiment is a positive electrode active material suitably used for an all-solid-state lithium-ion battery containing an oxide-based solid electrolyte.

Hereinafter, the positive electrode active material for an all-solid-state lithium-ion battery of the present embodiment may be simply referred to as a **"positive electrode active material."**

The positive electrode active material satisfies the following requirements.

(Requirement 1) The lithium metal composite oxide contained in the positive electrode active material has a layered structure and contains at least Li and a transition metal. Here, in this specification, the transition metal refers to a transition metal element.

(Requirement 2) In the positive electrode active material, in pore physical properties obtained from nitrogen adsorption isotherm measurement and nitrogen desorption isotherm measurement at a liquid nitrogen temperature, a total pore volume obtained from a nitrogen adsorption amount when the relative pressure ($p/p_0$) of an adsorption isotherm is 0.99 is less than 0.0035 $cm^3/g$.

The requirements will be described below in order.

(Requirement 1: lithium metal composite oxide)

The lithium metal composite oxide contains at least one element selected from the group consisting of Ni, Co, Mn, Ti, Fe, V and W as a transition metal.

When the lithium metal composite oxide contains at least one selected from the group consisting of Ni, Co and Mn as a transition metal, the obtained lithium metal composite oxide forms a stable crystal structure in which lithium ions can be desorbed or inserted. Therefore, when the positive electrode active material is used for a positive electrode of an all-solid-state lithium-ion battery, a high charging capacity and discharging capacity can be obtained.

In addition, when the lithium metal composite oxide contains at least one selected from the group consisting of Ti, Fe, V and W, the obtained lithium metal composite oxide has a strong crystal structure. Therefore, the positive electrode active material has high thermal stability. In addition, such a positive electrode active material can improve a cycle characteristic of the all-solid-state lithium-ion battery.

More specifically, the lithium metal composite oxide is represented by the following Composition Formula (A).

$$Li[Li_x(Ni_{(1-y-z-w)}Co_yMn_zM_w)_{1-x}]O_2 \cdots \qquad (A)$$

(where, M is at least one element selected from the group consisting of Fe, Cu, Ti, Mg, Al, W, B, Mo, Nb, Zn, Sn, Zr, Ga, La and V, and $-0.1 \leq x \leq 0.30$, $0 \leq y \leq 0.40$, $0 \leq z \leq 0.40$, $0 \leq w \leq 0.10$, and $0 < y+z+w$ are satisfied).

(Regarding x)

In order to obtain an all-solid-state lithium-ion battery having a favorable cycle characteristic, x is preferably more than 0, more preferably 0.01 or more, and still more preferably 0.02 or more. In addition, in order to obtain an all-solid-state lithium-ion battery having a high initial Coulomb efficiency, x is preferably 0.25 or less, and more preferably 0.10 or less.

Here, in this specification, a **"favorable cycle characteristic"** means a characteristic by which the amount of a battery capacity decreases due to repeated charging and discharging is small, and means that a ratio of the capacity during remeasurement to the initial capacity is unlikely to decrease.

**In addition, in this specification, the "initial Coulomb efficiency" is a value obtained by "(initial discharging capacity)/(initial charging capacity)×100(%)." An all-**solid-state lithium-ion battery having a high initial Coulomb efficiency has a small irreversible capacity during initial charging and during discharging, and tends to have a relatively large volume and capacity per weight.

The upper limit values and the lower limit values of x can be arbitrarily combined. x may preferably be -0.10 or more and 0.25 or less, and may more preferably be -0.10 or more and 0.10 or less.

x may preferably be more than 0 and 0.30 or less, may more preferably be more than 0 and 0.25 or less, and even more preferably be more than 0 and 0.10 or less.

x may preferably be 0.01 or more and 0.30 or less, may more preferab ly be 0.01 or more and 0.25 or less, and may even more preferably be 0.01 or more and 0.10 or less.

x may preferably be 0.02 or more and 0.3 or less, may more preferably be 0.02 or more and 0.25 or less, and may even more preferab ly be 0.02 or more and 0.10 or less.

It is preferable that x satisfy $0<x\leq0.30$.

(Regarding y)

In order to obtain an all-solid-state lithium-ion battery having a low battery internal resistance, y is preferably more than 0, more preferably 0.005 or more, still more preferably 0.01 or more, and particularly preferably 0.05 or more. In addition, in order to obtain an all-solid-state lithium-ion battery having high thermal stability, y is more preferably 0.35 or less, still more preferably 0.33 or less, and yet more preferably 0.30 or less.

The upper limit values and the lower limit values of y can be arbitrarily combined. y may preferably be 0 or more and 0.35 or less, may more preferably be 0 or more and 0.33 or less, and may even more preferably be 0 or more and 0.30 or less.

y may be preferably more than 0 and 0.40 or less, may more preferably be more than 0 and 0.35 or less, may be more than 0 and 0.33 or less, and may even more preferably be more than 0 and 0.30 or less.

y may preferably be 0.005 or more and 0.40 or less, may more preferably be 0.005 or more and 0.35 or less, may even more preferably be 0.005 or more and 0.33 or less, and may yet even more preferably be 0.005 or more and 0.30 or less.

y may preferably be 0.01 or more and 0.40 or less, may more preferably be 0.01 or more and 0.35 or less, may even more preferably be 0.01 or more and 0.33 or less, and may yet even more preferably be 0.01 or more and 0.30 or less.

y may preferably be 0.05 or more and 0.40 or less, may more preferably be 0.05 or more and 0.35 or less, may even more preferably be 0.05 or more and 0.33 or less, and may yet even more preferably be 0.05 or more and 0.30 or less.

It is preferable that y satisfy $0<y\leq0.40$.

In Composition Formula (A), $0<x\leq0.10$, and $0<y\leq0.40$ are more preferable.

(Regarding z)

In order to obtain an all-solid-state lithium-ion battery having excellent cycle characteristics, z is preferably more than 0, more preferably 0.01 or more, still more preferably 0.02 or more, and yet more preferably 0.1 or more. In addition, in order to obtain an all-solid-state lithium-ion battery having high storability at a high temperature (for example, in an environment at 60°C), z is preferably 0.39 or less, more preferably 0.38 or less, and still more preferably 0.35 or less.

The upper limit values and the lower limit values of z can be arbitrarily combined. z may preferably be 0 or more and 0.39 or less, may more preferably be 0 or more and 0.38 or less, and may even more preferably be 0 or more and 0.35 or less.

z may preferably be 0.01 or more and 0.40 or less, may more preferably be 0.01 or more and 0.39 or less, may even more preferably be 0.01 or more and 0.38 or less, and may yet even more preferably be 0.01 or more and 0.35 or less.

z may preferably be 0.02 or more and 0.40 or less, may more preferably be 0.02 or more and 0.39 or less, may even more preferably be 0.02 or more and 0.38 or less, and may yet even more preferably be 0.02 or more and 0.35 or less.

z may preferably be 0.10 or more and 0.40 or less, may more preferably be 0.10 or more and 0.39 or less, may even more preferably be 0.10 or more and 0.38 or less, and may yet even more preferably be 0.10 or more and 0.35 or less.

It is preferable that z satisfy $0.02\leq z\leq0.35$.

(Regarding w)

In order to obtain an all-solid-state lithium-ion battery having a low battery internal resistance, w is preferably more than 0, more preferably 0.0005 or more, and still more preferably 0.001 or more. In addition, in order to obtain an all-solid-state lithium-ion battery having a large discharging capacity at a high current rate, w is preferably 0.09 or less, more preferably 0.08 or less, and still more preferably 0.07 or less.

The upper limit values and the lower limit values of w can be arbitrarily combined. w may preferably be 0 or more and 0.09 or less, may more preferably be 0 or more and 0.08 or less, and may even more preferably be 0 or more and 0.07 or less.

w may preferably be more than 0 and 0.10 or less, may more preferably be more than 0 and 0.09 or less, may even more preferably be more than 0 and 0.08 or less, and may yet even more preferably be more than 0 and 0.07 or less.

w may preferably be 0.0005 or more and 0.10 or less, may more preferably be 0.0005 or more and 0.09 or less, may even more preferably be 0.0005 or more and 0.08 or less, and may yet even more preferably be 0.0005 or more and 0.07 or less.

w may preferably be 0.001 or more and 0.10 or less, may more preferably be 0.001 or more and 0.09 or less, may even more preferably be 0.001 or more and 0.08 or less, and may yet even more preferably be 0.001 or more and 0.07 or less.

It is preferable that w satisfy $0 \leq w \leq 0.07$.

(Regarding y+z+w)

In order to obtain an all-solid-state lithium-ion battery having a large battery capacity, y+z+w is preferably 0.50 or less, more preferably 0.48 or less, and still more preferably 0.46 or less.

y+z+w is more than 0, preferably 0.001 or more, and more preferably 0.002 or more.

y+z+w is preferably more than 0 and 0.50 or less.

The lithium metal composite oxide preferably satisfies $1-y-z-w \geq 0.50$ and $y \leq 0.30$ in Composition Formula (A). That is, the lithium metal composite oxide preferably has a Ni content molar ratio of 0.50 or more and a Co content molar ratio of 0.30 or less in Composition Formula (A).

(Regarding M)

M represents at least one element selected from the group consisting of Fe, Cu, Ti, Mg, Al, W, B, Mo, Nb, Zn, Sn, Zr, Ga, La and V.

In addition, in order to obtain an all-solid-state lithium-ion battery having excellent cycle characteristics, M in Composition Formula (A) is preferably at least one element selected from the group consisting of Ti, Mg, Al, W, B, and Zr, and more preferably at least one element selected from the group consisting of Al and Zr. In addition, in order to obtain an all-solid-state lithium-ion battery having high thermal stability, M is more preferably at least one element selected from the group consisting of Ti, Al, W, B, and Zr.

As an example of a preferable combination of the above x, y, z, and w, x is 0.02 or more and 0.30 or less, y is 0.05 or more and 0.30 or less, z is 0.02 or more and 0.35 or less, and w is 0 or more and 0.07 or less. For example, a lithium metal composite oxide with x=0.05, y=0.20, z=0.30, and w=0, a lithium metal composite oxide with x=0.05, y=0.08, z=0.04, and w=0, and a lithium metal composite oxide with x=0.25, y=0.07, z=0.02, and w=0 is an exemplary example.

<Composition analysis>

The composition of the lithium metal composite oxide can be confirmed by dissolving particles of the positive electrode active material containing lithium metal composite oxides in hydrochloric acid and then performing composition analysis using an inductively coupled plasma emission analysis device. The composition analysis results for Li and transition metals can be regarded as the results of composition analysis of the lithium metal composite oxide. As the inductively coupled plasma emission analysis device, for example, an SPS3000 (commercially available from SII NanoTechnology Inc.) can be used.

Here, the all-solid-state lithium-ion battery is charged by applying a negative potential to a positive electrode and a positive potential to a negative electrode by an external power supply.

In addition, the all-solid-state lithium-ion battery is discharged by connecting a discharge circuit to the positive electrode and the negative electrode of the charged all-solid-state lithium-ion battery and applying a current to the discharge circuit. The discharge circuit includes electronic components, electrical components and electric vehicles driven by the power of the all-solid-state lithium-ion battery.

(Layered structure)

The crystal structure of the lithium metal composite oxide is a layered structure. The crystal structure of the lithium metal composite oxide is more preferably a hexagonal crystal structure or a monoclinic crystal structure.

The hexagonal crystal structure belongs to any one space group selected from the group consisting of P3, $P3_1$, $P3_2$, R3, P-3, R-3, P312, P321, $P3_1$12, $P3_1$21, $P3_2$12, $P3_2$21, R32, P3m1, P31m, P3c1, P31c, R3m, R3c, P-31m, P-31c, P-3m1, P-3c1, R-3m, R-3c, P6, $P6_1$, $P6_5$, $P6_2$, $P6_4$, $P6_3$, P-6, P6/m, $P6_3$/m, P622, $P6_1$22, $P6_5$22, $P6_2$22, $P6_4$22, $P6_3$22, P6mm, P6cc, $P6_3$cm, $P6_3$mc, P-6m2, P-6c2, P-62m, P-62c, P6/mmm, P6/mcc, $P6_3$/mcm, and $P6_3$/mmc.

In addition, the monoclinic crystal structure belongs to any one space group selected from the group consisting of P2, $P2_1$, C2, Pm, Pc, Cm, Cc, P2/m, $P2_1$/m, C2/m, P2/c, $P2_1$/c, and C2/c.

Among these, in order to obtain an all-solid-state lithium-ion battery having a large discharging capacity, the crystal structure is particularly preferably a hexagonal crystal structure belonging to the space group R-3m or a monoclinic crystal structure belonging to C2/m.

<Method of confirming crystal structure>

The crystal structure can be confirmed by performing observation using a powder X-ray diffraction measuring device.

For powder x-ray diffraction measurement, an X-ray diffraction device, for example, UltimaIV (commercially available from Rigaku Corporation), can be used.

(Requirement 2)

The total pore volume of the positive electrode active material is less than 0.0035 $cm^3$/g, preferably 0.003$cm^3$/g or less, more preferably 0.0025 $cm^3$/g or less, and still more preferably 0.0015 $cm^3$/g or less.

In pore physical properties obtained from nitrogen adsorption isotherm measurement and nitrogen desorption isotherm measurement at a liquid nitrogen temperature, the total pore volume is a total pore volume obtained from a nitrogen adsorption amount when the relative pressure (p/po) of an adsorption isotherm is 0.99 **(hereinafter referred to as a "total pore volume A")**.

Examples of lower limit values of the total pore volume include 0 $cm^3$/g or more, 0.00001 $cm^3$/g or more, 0.00002 $cm^3$/g or more, and 0.00003 $cm^3$/g or more.

The upper limit values and the lower limit values can be arbitrarily combined.

Examples of combinations of the upper limit value and the lower limit value of the total pore volume A include 0 $cm^3$/g or more and less than 0.0035 $cm^3$/g, 0.00001 $cm^3$/g or more and 0.003 $cm^3$/g or less, 0.00002 $cm^3$/g or more and 0.0025 $cm^3$/g or less, 0.00003 $cm^3$/g or more and 0.0015 $cm^3$/g or less.

The pore distribution is measured by a nitrogen adsorption method and a nitrogen desorption method used for pore analysis.

Specifically, using a general measuring device, nitrogen is gradually added to the positive electrode active material from which the physical adsorption component has been removed in advance from the starting state under vacuum, and the amount of nitrogen adsorbed is calculated by a constant volume method from the change in nitrogen pressure due to adsorption.

Thereby, a nitrogen adsorption isotherm from 0 atm to 1 atm at a liquid nitrogen temperature is obtained. After the pressure reaches atmospheric pressure, the amount of nitrogen is gradually reduced, and a desorption isotherm from 1 atm to 0 atm is obtained.

As the measuring device, for example, BELSORP-mini (commercially available from MicrotracBel Corp.) can be used.

The state of 0.99, which is a state in which the relative pressure is close to 1, is a pressure near the saturated vapor pressure, and it is thought that nitrogen causes capillary condensation in pores and exists almost in a liquid phase state. The total pore volume can be obtained by converting the amount of nitrogen assumed to be in a liquid phase state into the standard state volume of the gas.

**In the following, "a proportion of the volume of pores having a pore diameter** of 50 nm or less with respect to a total pore volume of pores having a pore diameter of 200 nm or less in the pore distribution obtained from the desorption isotherm by a Barrett-Joyner-**Halenda (BJH) method" may be abbreviated as a "proportion of pores of 50 nm or less."**

The proportion of pores of 50 nm or less in the positive electrode active material is preferably 45% or more, more preferably 47% or more, and still more preferably 50% or more.

Examples of upper limit values of the proportion of pores of 50 nm or less include 80% or less, 75% or less, and 60% or less.

The upper limit values and the lower limit values of the proportion of pores of 50 nm or less can be arbitrarily combined.

Examples of combinations include a proportion of pores of 50 nm or less of 45% or more and 80% or less, 47% or more and 75% or less, and 50% or more and 60% or less.

The BJH method is a method in which the pore shape is assumed to be columnar and analysis is performed based on the relationship formula (Kelvin formula) between the pore diameter at which capillary condensation is caused and the relative pressure of nitrogen. The pore diameter distribution obtained from the desorption isotherm is derived from the bottleneck type pores.

In the pore distribution obtained from the desorption isotherm by the BJH method, when it is described that the proportion of pores of 50 nm or less is equal to or larger than the lower limit value, that is, the proportion of pores having a pore diameter of 50 nm or less in the total pore volume of pores having a pore diameter of 200 nm or less is large, it means that the proportion of pores having a pore diameter of 150 nm or more and 200 nm or less is small.

When an electrode for an all-solid-state lithium-ion battery is produced, other materials such as a conductive material are unlikely to enter the pores in a range of 150 nm or more and 200 nm or less. Therefore, when an electrode is produced, the pores in such a pore diameter range tend to remain as voids in which lithium ions cannot diffuse. In the present embodiment, it is thought that, since the proportion of such voids is small, the resistance of the battery becomes small, and the overvoltage can be reduced.

The positive electrode active material preferably satisfies the following requirement 3.

(Requirement 3)

In the positive electrode active material, in a cumulative pore distribution curve obtained by a mercury intrusion porosimetry to be described below, the pore diameter **$D_{75}$ at a cumulative 25% is preferably 7.4 $\mu$m or less, more preferably 7.3 $\mu$m or less, and still more preferably 7.2 $\mu$m or less. Examples of the lower limit value of $D_{75}$ include 1.0 $\mu$m or more, 1.1 $\mu$m or more, and 1.2 $\mu$m or more.**

The upper limit values and the lower limit values can be arbitrarily combined. Examples of combinations include a **$D_{75}$ of 1.0 $\mu$m or more and 7.4 $\mu$m or less, 1.1 $\mu$m or more and 7.3 $\mu$m or less, and 1.2 $\mu$m or more and 7.2 $\mu$m or less.**

In the positive electrode active material, in the cumulative pore distribution curve, the pore diameter $D_5$ **at a cumulative 95% is preferably 0.0135 $\mu$m or more, more preferably 0.0140 $\mu$m or more, and still more preferably 0.0145 $\mu$m or more. Examples** of the upper limit value of $D_5$ **include 0.1 $\mu$m or less, 0.09 $\mu$m or less, and 0.08 $\mu$m or** less.

The upper limit values and the lower limit values can be arbitrarily combined.

Examples of combinations include a $D_5$ **of 0.0135 $\mu$m or more and 1 $\mu$m or less,** 0.0140 $\mu$m or more and **0.09 $\mu$m or less, and 0.0145 $\mu$m or more and 0.08 $\mu$m or less.**

<Mercury intrusion porosimetry>

The pore distribution measurement according to the mercury intrusion porosimetry is performed by the following method.

First, the sample cell containing the positive electrode active material is vacuumed, and the inside of the sample cell is filled with mercury. Mercury has a high surface tension, and mercury does not directly enter the pores on the surface of the positive electrode active material. On the other hand, when a pressure is applied to mercury and the pressure gradually increases, mercury gradually enters the pores from the pores having a large diameter to the pores having a small diameter in order.

If the amount of mercury pressed-into the pores is detected while the pressure continuously increases, a mercury intrusion curve is obtained from the relationship between the pressure applied to mercury and the amount of mercury pressed-into.

Here, when the shape of the pore is assumed to be a cylindrical shape, the pressure applied to mercury is P, the pore diameter (pore diameter) is D, the surface tension of mercury is $\sigma$, and the contact angle between mercury and the sample is $\theta$, the pore diameter is represented by the following Formula (X).

$$D = -4\sigma \times \cos\theta / P \quad \cdots(X)$$

(in Formula (X), the surface tension $\sigma$ is 480 mN/m (480 dyne/cm), and the contact angle $\theta$ is 140°).

That is, there is a correlation between the pressure P applied to mercury and the diameter D of the pores that mercury enters. Therefore, based on the obtained mercury intrusion curve, a cumulative pore distribution curve representing the relationship between the size of the pore radius of the positive electrode active material and the volume thereof can be obtained.

In the obtained cumulative pore distribution curve, the pore diameter at a cumulative 25% is set as $D_{75}$.

In addition, in the obtained cumulative pore distribution curve, the pore diameter at a cumulative 95% is set as $D_5$.

**In addition, since $\sigma$ and $\theta$ are constants,** the relationship between the applied pressure P and the pore diameter D is obtained from Formula (X). When the volume of mercury entered at that time is measured, a cumulative pore volume can be derived.

Here, when the length of the pore having a pore diameter D is set as L, the volume V is represented by the following Formula (B).

$$V=\pi D^2 L/4 \quad \cdots(B)$$

**Since the side area S of the cylinder is $\pi DL$, it can be expressed as S=4V/D.** Here, assuming that the volume increase dV in a certain pore diameter range is due to cylindrical pores having a certain average pore diameter, the specific surface area increased in that section can be determined as dA=4dV/Dav (Dav is an average pore diameter), and the pore specific surface area $\Sigma A$ is calculated.

Here, as an approximate measurement limit of the pore diameter by the mercury intrusion porosimetry, the lower limit is about 2 nm or more, and the upper limit is about **200 $\mu$m or less. The measurement by the mercury** intrusion porosimetry can be performed using a device such as a mercury porosimeter. Specific examples of mercury porosimeters include Autopore III 9420 (commercially available from Micromeritics Instruments Co.).

According to studies by the inventors, it has been found that, although a positive electrode active material exhibits favorable battery performance when used for a positive electrode of a conventional liquid-based lithium-ion secondary battery, it exhibits insufficient performance when used for a positive electrode of an all-solid-state lithium-ion battery. Based on the findings specific to such an all-solid-state lithium-ion battery, the inventors conducted studies and found that, when the positive electrode active material satisfying the above requirement 1 and requirement 2 is used for a positive electrode of an all-solid-state lithium-ion battery, it is possible to minimize a voltage rise (overvoltage) after initial charging starts.

When the positive electrode active material satisfies the requirement 1, it can favorably insert and desorb lithium ions.

In an all-solid-state lithium-ion battery, voids present in the positive electrode active material into which an electrolyte cannot be inserted cannot serve as a diffusion path for lithium ions and also serve as resistance to electron transfer. Therefore, when the volume of voids in the positive electrode active material is smaller, the internal resistance of the battery is lower.

For the positive electrode active material satisfying the requirement 2, the abundance of voids that can become resistance is small for the positive electrode active material itself or when it is press-molded as an electrode for an all-solid-state lithium-ion battery. Therefore, the internal resistance of the battery is low, and it is possible to reduce a voltage rise (overvoltage) after initial charging starts.

For the above reasons, when the positive electrode active material satisfying the requirements 1 and 2 is used for a positive electrode of an all-solid-state lithium-ion battery, it is possible to reduce a voltage rise (overvoltage) after initial charging starts, and it is possible to improve battery performance.

The overvoltage of the all-solid-state lithium-ion battery can be evaluated by the following method.

<Production of all-solid-state lithium-ion battery>

(Production of positive electrode active material sheet)

A positive electrode active material and $Li_3BO_3$ are mixed so that the composition has a ratio of the positive electrode active material:$Li_3BO_3$=80:20 (molar ratio) to obtain a mixed powder. A resin binder (ethyl cellulose), a plasticizer (dioctyl phthalate), and a solvent (acetone) are added to the obtained mixed powder so that the composition has a ratio of the mixed powder : resin binder : plasticizer : solvent=100:10:10:100 (mass ratio) and mixed using a planetary stirring/defoaming device.

The obtained slurry is defoamed using a planetary stirring/defoaming device to obtain a positive electrode mixture slurry.

The obtained positive electrode mixture slurry is applied onto a PET film using a doctor blade, and the coating film is dried to form a positive electrode film having a **thickness of 50 $\mu$m.**

The positive electrode film is peeled off from the PET film and punched into a circle having a diameter of 14.5 mm, and additionally pressed uniaxially at 20 MPa in the thickness direction of the positive electrode film for 1 minute to obtain a positive electrode active material sheet **having a thickness of 40 μm**.

(Production of all-solid-state lithium-ion battery)

A positive electrode active material sheet and a solid electrolyte pellet of $Li_{6.75}La_3Zr_{1.75}Nb_{0.25}O_{12}$ (for example, commercially available from Toshima & Co., Ltd.) are laminated, and uniaxially pressed parallel to the lamination direction to obtain a laminate.
A positive electrode current collector (gold foil with a thickness of 500 μm) is additionally laminated on the positive electrode active material sheet of the obtained laminate, and heated at 300°C for 1 hour when pressurized at 100 gf, and organic components are burned. In addition, after the temperature is raised to 800°C at 5°C/min, sintering is performed at 800°C for 1 hour to obtain a laminate of a solid electrolyte layer and a positive electrode.
Next, the following operation is performed in an argon atmosphere glove box.
A negative electrode **(Li foil with a thickness of 300 μm)**, a negative electrode current collector (stainless steel plate with a thickness of 50 μm), and a waved washer (made of stainless steel) are additionally laminated on the solid electrolyte layer in the laminate of the solid electrolyte layer and the positive electrode.
For the laminate laminated from the positive electrode to the waved washer, the positive electrode is placed on a lower lid of parts for a coin type battery R2032 (commercially available from Hohsen Corporation), it is stacked on the waved washer and covered with an upper lid, and an all-solid-state lithium-ion battery is produced by caulking with a caulking machine.

<Evaluation of overvoltage>

Using the all-solid-state lithium-ion battery produced by the above method, the initial charging test is performed under the following conditions, and the voltage measured 30 seconds after initial charging starts is calculated. When the value of the voltage is smaller, it indicates that a more overvoltage is reduced.

<Conditions of initial charging and discharging test>

Test temperature: 60°C
A maximum charging voltage of 4.3 V, a charging current of 0.01 CA, constant current constant voltage charging, an end current value of 0.002C

(Other configuration 1)

In the positive electrode active material, particles constituting the positive electrode active material are preferably composed of primary particles, secondary particles which are aggregates of the primary particles, and single particles that exist independently of the primary particles and the secondary particles.

<Method of confirming particle shape>

"Primary particles" are particles having no grain boundaries in appearance when observed using a scanning electron microscope in a field of view of 20,000x, and indicate particles having a particle diameter of less than 0.5 μm.
In the present invention, "secondary particles" are particles formed by aggregating primary particles. When secondary particles are observed using a scanning electron microscope in a field of view of 20,000x, grain boundaries are present in appearance.
In the present invention, "single particles" are particles that are present independently of secondary particles and have no grain boundaries in appearance when observed using a scanning electron microscope in a field of view of 20,000x, and indicate particles having a particle diameter of **0.5 μm or more**.
That is, the positive electrode active material of the present embodiment is composed of particles having no grain boundaries in appearance and particles having grain boundaries in appearance when observed using a scanning electron microscope in a field of view of 20,000x.
Particles having no grain boundaries in appearance are composed of **"primary** particles" having a small particle diameter and **"single particles"** having a large particle diameter based on a particle diameter of **0.5 μm.**
Particles having grain boundaries in appearance are **"secondary particles"** which are aggregates of the above **"primary particles."**
In the positive electrode active material, the amount of single particles in all the particles is preferably 20% or more. When the positive electrode active material in which the amount of single particles in all the particles is 20% or more in terms of number percentage of particles is used in an all-solid-state battery, it is easy to secure the contact interface with the solid electrolyte in the positive electrode layer, and conduction of lithium ions is smoothly performed through the interface.

In addition, in the positive electrode active material in which the amount of single particles in all the particles is 20% or more, since there are no grain boundaries within single particles in all the particles, even if it is used in a positive electrode of an all-solid-state lithium-ion battery and charging and discharging are repeatedly performed, the particles are not easily broken and the conductive path is easily maintained.

The average particle diameter of the single particles is preferably **0.5 μm or** more, and more preferably **1.0 μm or more.** In addition, the average particle diameter of the single particles is preferably **10 μm or less,** and more preferably **5 μm or less.**

The upper limit values and the lower limit values of the average particle diameter of the single particles can be arbitrarily combined.

Examples of combinations of the upper limit value and the lower limit value of the average particle diameter of the single particles include **0.5 μm or more and 10 μm or** less and **1.0 μm or more and 5 μm or less.**

The average particle diameter of the secondary particles is preferably **3.0 μm or** more and more preferably **5.0 μm or more.** In addition, the average particle diameter of the secondary particles is preferably **15 μm or less** and more preferably **10 μm or less.**

The upper limit values and the lower limit values of the average particle diameter of the secondary particles can be arbitrarily combined.

Examples of combinations of the upper limit value and the lower limit value of the average particle diameter of the secondary particles include **3.0 μm or more and 15 μm or less**, and **5.0 μm or more and 10 μm or less.**

The average particle diameter of the single particles and the secondary particles can be measured by the following method.

First, the positive electrode active material is placed on a conductive sheet attached to a sample stage. Next, using a scanning electron microscope, an electron beam having an acceleration voltage of 20 kV is emitted to the positive electrode active material, and observation is performed in a field of view of 20,000x.

As the scanning electron microscope, for example, JSM-5510 (commercially available from JEOL Ltd.) can be used.

Next, 50 or more and 98 or fewer single particles or secondary particles are extracted from the obtained electron microscope image (SEM image) by the following method.

(Method of extracting single particles)

When the average particle diameter of the single particles is measured, in a field of view magnified 20,000x, all single particles included in one field of view are measurement targets. When the number of single particles included in one field of view is less than 50, single particles in a plurality of fields of view are measurement targets before the number of particles measured is 50 or more.

(Method of extracting secondary particles)

When the average particle diameter of the secondary particles is measured, in a field of view magnified 20,000x, all secondary particles included in one field of view are measurement targets. When the number of secondary particles included in one field of view is less than 50, secondary particles in a plurality of fields of view are measurement targets before the number of particles measured is 50 or more.

For the image of the extracted single particles or secondary particles, the distance between parallel lines (diameter in the constant direction) drawn from a certain direction when interposed between the parallel lines is measured as the particle diameter of the single particles or the secondary particles.

The arithmetic mean value of the obtained particle diameters of the single particles or secondary particles is the average particle diameter of the single particles contained in the positive electrode active material or the average particle diameter of the secondary particles contained in the positive electrode active material.

<Method of calculating amount of single particles>

The positive electrode active material powder is observed using a scanning electron microscope at 20,000x, and the numbers of single particles and secondary particles in the observed field of view are counted. The number of single particles is N1, the number of secondary particles is N2, and the number percentage of single particles is calculated by N1/(N1+N2)[%]. Here, when the number of particles that can be observed is less than 50, a plurality of continuous fields of view are acquired and observed before 50 particles can be confirmed.

(Other configuration 2)

The positive electrode active material preferably has a coating layer composed of a metal composite oxide on the surface of a lithium metal composite oxide constituting the positive electrode active material.

As the metal composite oxide constituting the coating layer, an oxide having lithium ion conductivity is preferably used.

It is known that, even if the metal composite oxide constituting the coating layer does not have lithium ion conductivity, if the coating layer is a very thin film (for example, 0.1 nm or more and 1.0 nm or less), the battery performance is improved as compared with the positive electrode active material having no coating layer. In this case, it is speculated that lithium ion conductivity is exhibited in the coating layer. However, a production method of forming a uniform coating layer on the surface of the particle such as a positive electrode active material by controlling the thickness to 1.0 nm or less is a production method limited by poor mass productivity.

On the other hand, when the metal composite oxide constituting the coating layer has lithium ion conductivity, this is preferable because the coating layer suitably conducts lithium ions, and the battery performance can be improved even if the thickness of the coating layer is about 5 nm to 20 nm.

Here, the thickness of the coating layer can be measured for a positive electrode active material having a maximum diameter of a 50% cumulative volume particle diameter D50 ($\mu$m)$\pm$5% obtained by laser diffraction type particle diameter distribution measurement. The arithmetic mean value of the values measured for 10 particles is used as the thickness of the coating layer.

For positive electrode active material particles which are measurement targets, the average thickness of the coating layer is determined from the analysis results using scanning transmission electron microscope (STEM)-energy dispersive X-ray spectroscopy (EDX). A line profile of an element specific to the coating layer is created, and based on the obtained line profile, the range in which the above specific element is detected is set as the range in which the coating layer is present, and the thickness of the coating layer can be determined.

Examples of such metal composite oxides include metal composite oxides of Li and at least one element selected from the group consisting of Nb, Ge, Si, P, Al, W, Ta, Ti, S, Zr, Zn, V and B.

When the positive electrode active material has a coating layer, it is difficult to form a high resistance layer at the interface between the positive electrode active material and the solid electrolyte, and a high output of the all-solid-state battery can be realized. Such an effect is particularly easily obtained in a sulfide-based all-solid-state battery using a sulfide-based solid electrolyte as a solid electrolyte.

<Method of producing a positive electrode active material 1>

When the lithium metal composite oxide is produced, first, a metal composite compound containing a metal element other than Li among metal elements constituting a lithium metal composite oxide as a desired product is prepared.

Then, it is preferable to calcine the metal composite compound with an appropriate lithium compound and an inactive melting agent.

Specifically, the **"metal composite compound"** is a compound including Ni, which is an essential metal element, and at least one optional element among Co, Mn, Fe, Cu, Ti, Mg, Al, W, B, Mo, Nb, Zn, Sn, Zr, Ga, La and V.

The metal composite compound is preferably a metal composite hydroxide or a metal composite oxide.

Hereinafter, an example of a method of producing a lithium metal composite oxide will be described separately for a process of producing a metal composite compound and a process of producing a lithium metal composite oxide.

(Process of producing metal composite compound)

The metal composite compound can be produced by a commonly known coprecipitation method. As the coprecipitation method, a commonly known batch type coprecipitation method or a continuous type coprecipitation method can be used. Hereinafter, a method of producing a metal composite compound will be described in detail using a metal composite hydroxide containing Ni, Co and Mn as a metal element as an example.

First, according to a coprecipitation method, and particularly, a continuous type coprecipitation method described in JP-A-2002-201028, a nickel salt solution, a cobalt salt solution, a manganese salt solution, and a complexing agent are reacted to produce a metal composite hydroxide represented by $Ni_{(1-y-z)}Co_yMn_z(OH)_2$ (in the formula, y+z<1).

The nickel salt which is a solute in the nickel salt solution is not particularly limited, and for example, any one or more of nickel sulfate, nickel nitrate, nickel chloride and nickel acetate can be used.

As a cobalt salt which is a solute in the cobalt salt solution, for example, any one or more of cobalt sulfate, cobalt nitrate, cobalt chloride, and cobalt acetate can be used.

As a manganese salt which is a solute in the manganese salt solution, for example, any one or more of manganese sulfate, manganese nitrate, manganese chloride, and manganese acetate can be used.

The above metal salts are used in a ratio corresponding to the composition ratio of $Ni_{(1-y-z)}Co_yMn_z(OH)_2$. That is, each metal salt is used in an amount in which a molar ratio of Ni in the solute in the nickel salt solution, Co in the solute in the cobalt salt solution, and Mn in the solute in the manganese salt solution is (1-y-z):y:z corresponding to the composition ratio of $Ni_{(1-y-z)}Co_yMn_z(OH)_2$.

In addition, the solvent for the nickel salt solution, the cobalt salt solution, and the manganese salt solution is water. That is, the solvent for the nickel salt solution, the cobalt salt solution, and the manganese salt solution is an aqueous solution.

The complexing agent is a compound that allows a complex with nickel ions, cobalt ions, and manganese ions to be formed in an aqueous solution. Examples of complexing agents include ammonium ion feeders, hydrazine, ethylenediaminetetraacetic acid, nitrilotriacetic acid, uracil diacetic acid, and glycine. Examples of ammonium ion feeders include ammonium salts such as ammonium hydroxide, ammonium sulfate, ammonium chloride, ammonium carbonate, and ammonium fluoride.

In a process of producing a metal composite hydroxide, a complexing agent may or may not be used. When a complexing agent is used, the amount of the complexing agent contained in a mixed solution containing a nickel salt solution, an arbitrary metal salt solution and a complexing agent is such that, for example, the molar ratio with respect to the total number of moles of the metal salt is more than 0 and 2.0 or less.

The amount of the complexing agent contained in a mixed solution containing a nickel salt solution, a cobalt salt solution, a manganese salt solution and a complexing agent is such that, for example, the molar ratio with respect to the total number of moles of the metal salt is more than 0 and 2.0 or less.

In the coprecipitation method, in order to adjust the pH value of the mixed solution containing a nickel salt solution, an arbitrary metal salt solution and a complexing agent, an alkali metal hydroxide is added to the mixed solution before the pH of the mixed solution changes from alkaline to neutral. The alkali metal hydroxide is, for example, sodium hydroxide or potassium hydroxide.

Here, the pH value in this specification is defined as a value measured when the temperature of the mixed solution is 40°C. The pH of the mixed solution is measured when the temperature of the mixed solution sampled from the reaction chamber reaches 40°C.

When the complexing agent is continuously supplied to the reaction chamber in addition to the nickel salt solution, the cobalt salt solution, and the manganese salt solution, Ni, Co, and Mn react with each other and $Ni_{(1-y-z)}Co_yMn_z(OH)_2$ is generated.

In the reaction, the temperature of the reaction chamber is controlled such that it is, for example, within a range of **20°C or higher and 80°C or lower,** and preferably **30°C or higher and 70°C or lower.**

In addition, in the reaction, the pH value in the reaction chamber is controlled such that it is, for example, within a range of pH 9 or more and pH 13 or less, and preferably pH 11 or more and pH 13 or less.

The substances in the reaction chamber are appropriately stirred and mixed.

As the reaction chamber used in the continuous type coprecipitation method, a type of a reaction chamber in which the formed reaction precipitate is caused to overflow for separation can be used.

When a metal salt concentration, a stirring speed, a reaction temperature, a reaction pH, calcining conditions to be described below and the like of the metal salt solution supplied to the reaction chamber are appropriately controlled, it is possible to control various physical properties such as the secondary particle diameter and the pore radius of the finally obtained lithium metal composite oxide.

In addition to controlling the above conditions, various gases, for example, inert gases such as nitrogen, argon, and carbon dioxide, oxidizing gases such as air and oxygen, or mixed gases thereof are supplied into the reaction chamber, and the oxidation state of the obtained reaction product may be controlled.

As a compound (oxidizing agent) that oxidizes the obtained reaction product, a peroxide such as hydrogen peroxide, a peroxide salt such as permanganate, perchlorate, hypochlorite, nitric acid, halogen, ozone or the like can be used.

As a compound that reduces the obtained reaction product, an organic acid such as oxalic acid or formic acid, a sulfite, hydrazine or the like can be used.

Specifically, the inside of the reaction chamber may have an inert atmosphere. When the inside of the reaction chamber has an inert atmosphere, among metal elements contained in the mixed solution, metal elements that are more easily oxidized than Ni are less likely to aggregate prior to Ni. Therefore, a uniform metal composite hydroxide can be obtained.

In addition, the inside of the reaction chamber may have an appropriate oxidizing atmosphere. The oxidizing atmosphere may be an oxygen-containing atmosphere in which an oxidizing gas is mixed with an inert gas, and when the inside of the reaction chamber in which an oxidizing agent may be present under an inert gas atmosphere has an appropriate oxidizing atmosphere, transition metals contained in the mixed solution are appropriately oxidized, and the morphology of the metal composite oxide can be easily controlled.

Oxygen and an oxidizing agent in the oxidizing atmosphere only need to have sufficient oxygen atoms to oxidize transition metals.

When the oxidizing atmosphere is an oxygen-containing atmosphere, the atmosphere in the reaction chamber can be controlled by a method such as aeration of an oxidizing gas in the reaction chamber, bubbling an oxidizing gas in the mixed solution or the like.

After the above reaction, the obtained reaction precipitate is washed with water and then dried to obtain a metal composite compound. In the present embodiment, a nickel cobalt manganese hydroxide is obtained as the metal composite compound.

In addition, when impurities derived from the mixed solution remain if the reaction precipitate is simply washed with water, as necessary, the reaction precipitate may be washed with weak acid water or an alkaline solution. Examples of alkaline solutions include an aqueous solution containing sodium hydroxide and potassium hydroxide.

In addition, in the above example, a nickel cobalt manganese composite hydroxide is produced, but a nickel cobalt manganese composite oxide may be prepared.

For example, a nickel cobalt manganese composite oxide can be prepared by oxidizing a nickel cobalt manganese composite hydroxide.

(Process of producing lithium metal composite oxide)

In this process, the metal composite oxide or the metal composite hydroxide is dried and the metal composite oxide or the metal composite hydroxide is then mixed with the lithium compound.

In addition, in the present embodiment, when a metal composite oxide or a metal composite hydroxide and a lithium compound are mixed, it is preferable to mix an inactive melting agent at the same time.

When a mixture containing a metal composite oxide, a lithium compound and an inactive melting agent or a mixture containing a metal composite hydroxide, a lithium compound and an inactive melting agent is calcined, in the presence of an inactive melting agent, a mixture containing a metal composite compound and a lithium compound is calcined. When a mixture containing a metal composite compound and a lithium compound is calcined in the presence of an inactive melting agent, secondary particles in which primary particles are sintered with each other are less likely to be generated. In addition, the growth of single particles can be promoted.

As the lithium compound, any one of lithium carbonate, lithium nitrate, lithium acetate, lithium hydroxide, lithium hydroxide, lithium oxide, lithium chloride, and lithium fluoride can be used or two or more thereof can be used in combination. Among these, either or both of lithium hydroxide and lithium carbonate are preferable.

When lithium hydroxide contains lithium carbonate as impurities, the amount of lithium carbonate in lithium hydroxide is preferably 5 mass% or less.

Drying conditions of the metal composite oxide or metal composite hydroxide are not particularly limited. The drying conditions may be, for example, any of the following conditions 1) to 3).

1) Conditions in which a metal composite oxide or a metal composite hydroxide is not oxidized or reduced. Specifically, drying conditions in which an oxide is maintained as an oxide without change and drying conditions in which a hydroxide is maintained as a hydroxide without change.

2) Conditions in which a metal composite hydroxide is oxidized. Specifically, drying conditions in which a hydroxide is oxidized to an oxide.

3) Conditions in which a metal composite oxide is reduced. Specifically, drying conditions in which an oxide is reduced to a hydroxide.

In order to set a condition in which oxidation or reduction does not occur, an inert gas such as nitrogen, helium or argon may be used in an atmosphere during drying.

In order to set a condition in which a hydroxide is oxidized, oxygen or air may be used in an atmosphere during drying.

In addition, in order to set a condition in which a metal composite oxide is reduced, a reducing agent such as hydrazine or sodium sulfite may be used under an inert gas atmosphere during drying.

After the metal composite oxide or the metal composite hydroxide is dried, classification may be appropriately performed.

The above lithium compound and metal composite compound are used in consideration of the composition ratio of the final desired product. For example, when a nickel cobalt manganese composite compound is used, the lithium compound and the metal composite compound are used in a ratio corresponding to the composition ratio of $Li[Li_x(Ni_{(1-y-z)}Co_yMn_z)_{1-x}]O_2$.

In addition, in the lithium metal composite oxide which is the final desired product, when the amount of Li is excessive (the content molar ratio is more than 1), mixing is performed in proportions such that the molar ratio between Li contained in the lithium compound and metal elements contained in the metal composite compound is a ratio exceeding 1.

When a mixture of a nickel cobalt manganese composite compound and a lithium compound is calcined, a lithium-nickel cobalt manganese composite oxide can be obtained. Here, for calcining, dry air, an oxygen atmosphere, an inert atmosphere or the like is used according to a desired composition, and if necessary, a plurality of calcining processes are performed.

In the present embodiment, the mixture may be calcined in the presence of an inactive melting agent. When calcining is performed in the presence of an inactive melting agent, the reaction of the mixture can be promoted. The inactive melting agent may remain in the lithium metal composite oxide after calcining or may be removed by washing with water or an alcohol after calcining. In the present embodiment, it is preferable to wash the lithium metal composite oxide after calcining with water or an alcohol.

When the retention temperature in calcining is adjusted, the particle diameter of the single particles can be controlled such that it is within a preferable range of the present embodiment.

Generally, when the retention temperature is higher, the particle diameter of the single particles is larger, and the BET specific surface area tends to be small. The retention temperature in calcining may be appropriately adjusted according to the type of a transition metal element used, and the type and amount of a precipitant, and an inactive melting agent.

The retention temperature may be set in consideration of the melting point of the inactive melting agent to be described below, and is preferably in a range of [the melting point of the inactive melting agent **-200°C] or higher** and [the melting point of the **inactive melting agent+200°C] or lower.**

As the retention temperature, specifically, a range of **200°C or higher** and **1,150°C or lower** is an exemplary example, and the retention temperature is preferably **300°C or higher** and **1,050°C or lower,** and more preferably **500°C or higher** and **1,000°C** or lower.

When the retention temperature is set to the lower limit value or less, it is possible to prevent the generation of new pores due to cracking of the positive electrode active material particle due to thermal stress.

When the retention temperature is set to the lower limit value or more, a positive electrode active material satisfying the requirements 2 and 3 is easily obtained.

In addition, the retention time at the retention temperature may be, for example, 0.1 hours or more and 20 hours or less, and is preferably 0.5 hours or more and 10 hours or less. The rate of temperature rise to the retention temperature is generally 50°C/hour or more and **400°C/hour or less,** and the rate of temperature drop from the retention temperature to room temperature is generally **10°C/hour or more** and **400°C/hour or less.** In addition, as a calcining atmosphere, air, oxygen, nitrogen, argon or a mixed gas thereof can be used.

(Arbitrary drying process)

It is preferable to dry the lithium metal composite oxide obtained after calcining. When drying is performed after calcining, it is possible to reliably remove the residual water that has entered fine pores. Water remaining in the fine pores causes deterioration of the solid electrolyte when an electrode is produced. When drying is performed after calcining and water remaining in the fine pores is removed, it is possible to prevent deterioration of the solid electrolyte.

When the lithium metal composite oxide having fine pores on the surface comes into contact with the solid electrolyte, the fine uneven structure on the surface of the lithium metal composite oxide exhibits an anchor effect. Therefore, for example, the solid electrolyte can conform to the expansion and contraction of the positive electrode active material according to charging and discharging.

A drying method after calcining is not particularly limited as long as water remaining in the lithium metal composite oxide can be removed.

As a drying method after calcining, for example, a vacuum drying treatment by vacuuming or a drying treatment using a hot air dryer is preferable.

The drying temperature is preferably, for example, a temperature of 80°C or **higher and 140°C or lower.**

The drying time is not particularly limited as long as water can be removed, and may be, for example, 5 hours or more and 12 hours or less.

(Arbitrary crushing process)

It is preferable to crush the calcined article obtained after calcining. When the calcined article is crushed, the calcined article is crushed starting from large pores. Therefore, a lithium metal composite oxide having a small proportion of large pores is obtained.

When there are a plurality of calcining processes, the calcined article may be crushed and the crushed product of the calcined article may be additionally calcined.

When calcining is performed after crushing, it is possible to remove foreign substances such as lithium carbonate generated on the surface of the crushed product.

In addition, the fracture surface of the crushed product tends to have high activity. When the crushed product is calcined, the atomic arrangement of the fracture surface can be stabilized. Thereby, it is possible to reduce the variation in battery performance.

An example of a production process including a plurality of calcining processes and a crushing process is described below.

(Example 1) A primary calcined article is obtained by primary-calcining and the primary calcined article is secondary-calcined. The secondary calcined article obtained by the secondary-calcining is crushed, and the obtained crushed product is tertiary-calcined.

(Example 2) A primary calcined article obtained by primary-calcining is crushed, and the crushed product of the primary calcined article is secondary-calcined.

(Example 3) The final calcined article obtained in the final calcining process is crushed.

(Example 4) A primary calcined article obtained by primary-calcining is crushed, and the crushed product of the primary calcined article is secondary-calcined. In addition, the secondary calcined article obtained by secondary-calcining is crushed.

In the present embodiment, (Example 1) or (Example 2) is preferable, and (Example 1) is more preferable.

The crushing treatment is preferably performed using a high-speed rotary crusher. Specific examples of high-speed rotary crushers include a pin mill.

The rotation speed of the high-speed rotary crusher is preferably in a range of 5,000 rpm or more and 20,000 rpm or less.

The speed at which the lithium metal composite oxide is supplied to the high-speed rotary crusher may be, for example, 5 kg/hour or more and 10 kg/hour.

The lithium metal composite oxide obtained by the above method is appropriately classified to obtain a positive electrode active material that can be applied to a lithium secondary battery.

The inactive melting agent that can be used in the present embodiment is not particularly limited as long as it does not easily react with the mixture during calcining. In the present embodiment, one or more selected from the group consisting of fluorides of at least one element **(hereinafter referred to as "A")** selected from the group consisting of Na, K, Rb, Cs, Ca, Mg, Sr and Ba, chlorides of A, carbonates of A, sulfates of A, nitrates of A, phosphates of A, hydroxides of A, molybdates of A and tungstates of A are an exemplary example, and specifically, compounds described in JP6734491B are an exemplary example.

In the present embodiment, two or more types of these inactive melting agents can be used. When two or more types are used, the melting point of all of the inactive melting agents may decrease.

In addition, among these inactive melting agents, at least one salt selected from the group consisting of carbonates of A, sulfates of A and chlorides of A is preferable as an inactive melting agent for obtaining a lithium metal composite oxide with higher crystallinity.

In addition, A is preferably either or both of Na and K.

That is, among the above inactive melting agents, particularly preferably, an inactive melting agent is preferably at least one selected from the group consisting of NaCl, KCl, $Na_2CO_3$, $K_2CO_3$, $Na_2SO_4$, and $K_2SO_4$, and it is more preferable to use either or both of $K_2SO_4$ and $Na_2SO_4$.

In the present embodiment, the abundance of the inactive melting agent during calcining may be appropriately selected. As an example, the abundance of the inactive melting agent during calcining with respect to 100 parts by mass of the lithium compound is preferably 0.1 parts by mass or more and more preferably 1 part by mass or more.

In addition, in order to promote the crystal growth, an inactive melting agent other than the above exemplified inactive melting agents may be used in combination. Examples of inactive melting agents used in this case include ammonium salts such as $NH_4Cl$ and $NH_4F$.

(Process of forming coating layer)

When a coating layer is formed on the surface of a lithium-ion metal composite oxide, first, a coating material raw material and a lithium metal composite oxide are mixed. Next, as necessary, a heat treatment is performed, and thus a coating layer can be formed on the surface of lithium metal composite oxide particles.

Depending on the coating material raw material, in the above process of producing a lithium metal composite oxide, when a metal composite compound and a lithium compound are mixed, a coating material raw material can be additionally added and mixed.

As the method of forming a coating layer and the coating material raw material in the present embodiment, methods and coating material raw materials described in JP6734491B can be applied.

When Al is used as the coating material raw material, it is preferable to perform calcining in a temperature range of **600°C or higher and 800°C or lower** for 4 hours or more and 10 hours or less. When calcining is performed under calcining conditions of such a high temperature and a long time, a positive electrode active material satisfying the above requirements 2 and 3 is easily obtained.

Particles in which a coating layer is formed on the surface of primary particles or secondary particles of a lithium metal composite oxide are appropriately crushed and classified to form a positive electrode active material.

<Method of producing a positive electrode active material 2>

When the positive electrode active material of the present embodiment contains single particles and secondary particles, the positive electrode active material can be produced by making the following change from the above method of producing a positive electrode active material 1.

(Process of producing metal composite compound)

In the method of producing a positive electrode active material 2, in the process of producing a metal composite compound, a metal composite compound that finally forms single particles and a metal composite compound that forms secondary particles are produced. Hereinafter, the metal composite compound that finally forms single particles may be referred to as a "single particle precursor." In addition, the metal composite compound that finally forms secondary particles may be referred to as a "secondary particle precursor."

In the method of producing a positive electrode active material 2, when a metal composite compound is produced by the above coprecipitation method, a first coprecipitation chamber for producing a single particle precursor and a second coprecipitation chamber for forming a secondary particle precursor are used.

A single particle precursor can be produced by appropriately controlling the concentration of the metal salt supplied into the first coprecipitation chamber, the stirring speed, the reaction temperature, the reaction pH, calcining conditions to be described below, and the like.

Specifically, the temperature of the **reaction chamber is preferably 30°C** or **higher and 80°C or lower,** more preferably controlled such that it is within a range of **40°C or higher and 70°C or lower, and still more preferably in a range of ±20°C with** respect to a second reaction chamber to be described below.

In addition, the pH value in the reaction chamber is, for example, preferably pH 10 or more and pH 13 or less, and more preferably controlled such that it is within a range of pH 11 or more and pH 12.5 or less. In addition, the pH value is still more preferably within a range of ±pH 2 or less with respect to a second reaction chamber to be described below, and particularly preferably a pH higher than that of the second reaction chamber.

In addition, a secondary particle precursor can be produced by appropriately controlling the concentration of a metal salt supplied to the second coprecipitation chamber, the stirring speed, the reaction temperature, the reaction pH, calcining conditions to be described below, and the like.

Specifically, the temperature of the reaction chamber is preferably 20°C or higher and 80°C or lower, more preferably controlled such that it is within a range of **30°C or higher and 70°C or lower,** and still more preferably within a range of ±20°C with respect to a second reaction chamber to be described below.

In addition, the pH value in the reaction chamber is, for example, preferably pH 10 or more and pH 13 or less, and is more preferably controlled such that it is within a range of pH 11 or more and pH 12.5 or less. In addition, the pH value is still more preferably within a range of ±pH 2 or less with respect to a second reaction chamber to be described below, and particularly preferably a pH lower than that of the second reaction chamber.

The reaction products obtained in this manner are washed with water and then dried to isolate the nickel cobalt manganese composite hydroxide. The nickel cobalt manganese composite hydroxide to be isolated contains a single particle precursor and a secondary particle precursor.

In addition, in the above example, a nickel cobalt manganese composite hydroxide is produced, but a nickel cobalt manganese composite oxide may be prepared. For example, a nickel cobalt manganese composite oxide can be prepared by oxidizing the nickel cobalt manganese composite hydroxide. As oxidation conditions of the nickel cobalt manganese composite hydroxide, the above calcining conditions can be used.

(Process of producing lithium metal composite oxide)

In the process of producing a lithium metal composite oxide, the metal composite oxide or metal composite hydroxide as the single particle precursor and the secondary particle precursor obtained in the above process is dried and then mixed with a lithium compound. The single particle precursor and the secondary particle precursor may be appropriately classified after drying.

The abundance ratio of the single particles and the secondary particles in the obtained positive electrode active material can be roughly controlled by mixing the single particle precursor and the secondary particle precursor at a predetermined mass ratio during mixing.

Here, in the process after mixing, the single particle precursor and the secondary particle precursor are aggregated or separated, and secondary particles produced by aggregation of the single particle precursors and single particles produced by separation of the secondary particle precursors can also exist. When the mixing ratio between the single particle precursor and the secondary particle precursor and conditions of the process after mixing are adjusted, it is possible to control the abundance ratio between the single particles and the secondary particles in the finally obtained positive electrode active material.

When the retention temperature in calcining is adjusted, the average particle diameter of the single particles and the average particle diameter of the secondary particles of the obtained positive electrode active material can be controlled such that they are within a preferable range of the present embodiment.

<Method of producing a positive electrode active material 3>

In addition, when the positive electrode active material contains single particles and secondary particles, according to the above method of producing a positive electrode active material 1, a first lithium metal composite oxide composed of single particles and a second lithium metal composite oxide composed of secondary particles are produced, and the first lithium metal composite oxide and the second lithium metal composite oxide can be mixed for production.

In the method of producing a positive electrode active material 3, in the process of producing a lithium metal composite oxide, the retention temperature when the first lithium metal composite oxide is calcined may be higher than the retention temperature when the second lithium metal composite oxide is calcined. Specifically, when the first lithium metal composite oxide is produced, the retention temperature is preferably 30°C or higher, more preferably 50°C or higher, and still more preferably 80°C or higher than the retention temperature of the second lithium metal composite oxide.

When the obtained first lithium metal composite oxide and second lithium metal composite oxide are mixed at a predetermined ratio, a positive electrode active material containing single particles and secondary particles can be obtained.

<All-solid-state lithium-ion battery>

Next, while explaining the configuration of the all-solid-state lithium-ion battery, a positive electrode using a positive electrode active material of an all-solid-state lithium-ion battery according to one aspect of the present invention as a positive electrode active material of an all-solid-state lithium-ion battery and an all-solid-state lithium-ion battery including this positive electrode will be described.

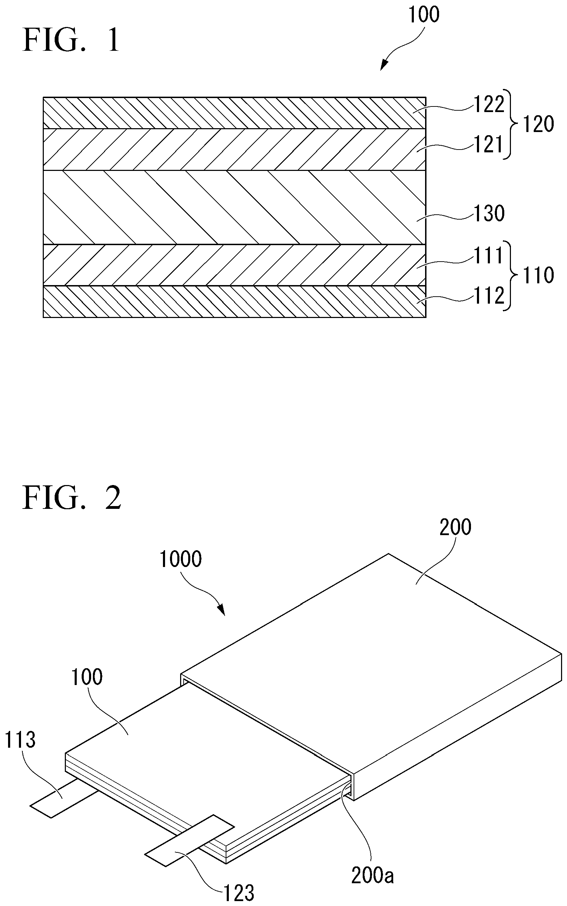

Figs. 1 and 2 are a schematic view showing an example of an all-solid-state lithium-ion battery of the present embodiment. Fig. 1 is a schematic view showing a laminate included in the all-solid-state lithium-ion battery of the present embodiment. Fig. 2 is a schematic view showing an overall structure of the all-solid-state lithium-ion battery of the present embodiment. The all-solid-state lithium-ion battery of the present embodiment is a secondary battery.

An all-solid-state lithium-ion battery 1000 includes a positive electrode 110, a negative electrode 120, a laminate 100 having a solid electrolyte layer 130, and an exterior body 200 in which the laminate 100 is accommodated.

Materials that form respective members will be described below.

The laminate 100 may include an external terminal 113 connected to a positive electrode current collector 112 and an external terminal 123 connected to a negative electrode current collector 122.

In the laminate 100, the solid electrolyte layer 130 is interposed between the positive electrode 110 and the negative electrode 120 so that short-circuiting is not caused. In addition, the all-solid-state lithium-ion battery 1000 includes a separator used in a conventional liquid-based lithium-ion secondary battery between the positive electrode 110 and the negative electrode 120 to prevent short circuiting between the positive electrode 110 and the negative electrode 120.

The all-solid-state lithium-ion battery 1000 includes an insulator (not shown) that insulates the laminate 100 and the exterior body 200, and a sealant (not shown) that seals an opening 200a of the exterior body 200.

As the exterior body 200, a container molded of a metal material having high corrosion resistance such as aluminum, stainless steel, or nickel-plated steel can be used. In addition, a container in which a laminate film of which at least one surface is subjected to a corrosion resistant treatment is processed into a bag shape can be used.

Examples of shapes of the all-solid-state lithium-ion battery 1000 include shapes such as a coin shape, a button shape, a paper shape (or sheet shape), a cylindrical shape, and a square shape.

In the drawing, the all-solid-state lithium-ion battery 1000 has one laminate 100, but the present invention is not limited thereto. The all-solid-state lithium-ion battery 1000 may have a configuration in which the laminate 100 is used as a unit cell, and a plurality of unit cells (the laminate 100) are enclosed inside the exterior body 200.

Hereinafter, respective components will be described in order.

(Positive electrode)

The positive electrode 110 has a positive electrode active material layer 111 and the positive electrode current collector 112.

The positive electrode active material layer 111 contains the positive electrode active material, which is one aspect of the present invention described above. In addition, the positive electrode active material layer 111 may contain a solid electrolyte (second solid electrolyte), a conductive material, and a binder.

The positive electrode active material contained in the positive electrode active material layer 111 is in contact with the second solid electrolyte contained in the positive electrode active material layer 111. Specifically, the positive electrode active material layer 111 contains a plurality of particles containing crystals of a lithium metal composite oxide (positive electrode active material), and a solid electrolyte that is filled between the plurality of particles (positive electrode active material) and in contact with the particles (positive electrode active material).

(Solid electrolyte)

As the solid electrolyte that the positive electrode active material layer 111 may contain, a solid electrolyte having lithium ion conductivity and used in a known all-solid-state battery can be used. Examples of such a solid electrolyte include an inorganic electrolyte and an organic electrolyte. Examples of inorganic electrolytes include an oxide-based solid electrolyte, a sulfide-based solid electrolyte, and a hydride-based solid electrolyte. Examples of organic electrolytes include a polymer-based solid electrolyte.

In the present embodiment, it is preferable to use an oxide-based solid electrolyte or a sulfide-based solid electrolyte and it is more preferable to use an oxide-based solid electrolyte.

(Oxide-based solid electrolyte)

Examples of oxide-based solid electrolytes include a perovskite-type oxide, a NASICON-type oxide, a LISICON-type oxide, and a garnet-type oxide.

Examples of perovskite-type oxides include Li-La-Ti-based oxides such as $Li_aLa_{1-a}TiO_3$ (0<a<1), Li-La-Ta-based oxides such as $Li_bLa_{1-b}TaO_3$ (0<b<1), and Li-La-Nb-based oxides such as $Li_cLa_{1-c}NbO_3$ (0<c<1).

Examples of NASICON-type oxides include $Li_{1+d}Al_dTi_{2-d}(PO_4)_3$ (0≤d≤1). The NASICON-type oxide is an oxide represented by $Li_mM^1_nM^2_oP_pO_q$.

In the formula, $M^1$ is at least one element selected from the group consisting of B, Al, Ga, In, C, Si, Ge, Sn, Sb and Se.

In the formula, $M^2$ is at least one element selected from the group consisting of Ti, Zr, Ge, In, Ga, Sn and Al.

In the formula, m, n, o, p and q are an arbitrary positive number.

Examples of LISICON-type oxides include an oxide represented by $Li_4M^3O_4$-$Li_3M^4O_4$.

In the formula, $M^3$ is at least one element selected from the group consisting of Si, Ge, and Ti.

In the formula, $M^4$ is at least one element selected from the group consisting of P, As and V.

Examples of garnet-type oxides include Li-La-Zr-based oxides such as $Li_7La_3Zr_2O_{12}$ (LLZ).

The oxide-based solid electrolyte may be a crystalline material and may be an amorphous material. Examples of amorphous solid electrolytes include Li-B-O compounds such as $Li_3BO_3$, $Li_2B_4O_7$, and $LiBO_2$. The oxide-based solid electrolyte preferably contains an amorphous material.

(Sulfide-based solid electrolyte)

Examples of sulfide-based solid electrolytes include $Li_2S$-$P_2S_5$-based compounds, $Li_2S$-$SiS_2$-based compounds, $Li_2S$-$GeS_2$-based compounds, $Li_2S$-$B_2S_3$-based compounds, $Li_2S$-$P_2S_3$-based compounds, $LiI$-$Si_2S$-$P_2S_5$-based compounds, $LiI$-$Li_2S$-$P_2O_5$-based compounds, $LiI$-$Li_3PO_4$-$P_2S_5$-based compounds, and $Li_{10}GeP_2S_{12}$.

Here, in this specification, the expression "-based compound" referring to a sulfide-based solid electrolyte is used as a general term for solid electrolytes mainly containing raw materials such as "$Li_2S$" and "$P_2S_5$" mentioned before "-based compound." For example, the $Li_2S$-$P_2S_5$-based compound contains a solid electrolyte containing $Li_2S$ and $P_2S_5$, and further containing other raw materials. In addition, the $Li_2S$-$P_2S_5$-based compound also includes solid electrolytes having different mixing ratios of $Li_2S$ and $P_2S_5$.

Examples of $Li_2S$-$P_2S_5$-based compounds include $Li_2S$-$P_2S_5$, $Li_2S$-$P_2S_5$-$LiI$, $Li_2S$-$P_2S_5$-$LiCl$, $Li_2S$-$P_2S_5$-$LiBr$, $Li_2S$-$P_2S_5$-$Li_2O$, $Li_2S$-$P_2S_5$-$Li_2O$-$LiI$, and $Li_2S$-$P_2S_5$-$Z_mS_n$ (m and n are a positive number, and Z indicates Ge, Zn or Ga).

Examples of $Li_2S$-$SiS_2$-based compounds include $Li_2S$-$SiS_2$, $Li_2S$-$SiS_2$-$LiI$, $Li_2S$-$SiS_2$-$LiBr$, $Li_2S$-$SiS_2$-$LiCl$, $Li_2S$-$SiS_2$-$B_2S_3$-$LiI$, $Li_2S$-$SiS_2$-$P_2S_5$-$LiI$, $Li_2S$-$SiS_2$-$Li_3PO_4$, $Li_2S$-$SiS_2$-$Li_2SO_4$, and $Li_2S$-$SiS_2$-$Li_xMO_y$ (x and y are a positive number, and M indicates P, Si, Ge, B, Al, Ga or In).

Examples of $Li_2S$-$GeS_2$-based compounds include $Li_2S$-$GeS_2$ and $Li_2S$-$GeS_2$-$P_2S_5$.

The sulfide-based solid electrolyte may be a crystalline material and may be an amorphous material. The sulfide-based solid electrolyte preferably contains an amorphous material.

(Hydride-based solid electrolyte)

Examples of hydride-based solid electrolyte materials include $LiBH_4$, $LiBH_4$-3KI, $LiBH_4$-$PI_2$, $LiBH_4$-$P_2S_5$, $LiBH_4$-$LiNH_2$, $3LiBH_4$-LiI, $LiNH_2$, $Li_2AlH_6$, $Li(NH_2)_2I$, $Li_2NH$, $LiGd(BH_4)_3Cl$, $Li_2(BH_4)(NH_2)$, $Li_3(NH_2)I$, and $Li_4(BH_4)(NH_2)_3$.

Examples of polymer-based solid electrolytes include organic polymer electrolyte such as polyethylene oxide-based polymer compounds and polymer compounds containing at least one selected from the group consisting of polyorganosiloxane chains and polyoxyalkylene chains.

In addition, a so-called gel-type electrolyte in which a non-aqueous electrolytic solution is retained in a polymer compound can be used. Unlike the non-aqueous electrolytic solution of the conventional liquid-based lithium-ion secondary battery, the non-aqueous electrolytic solution of the gel-type polymer-based solid electrolyte loses its fluidity and exhibits a higher rigidity than the electrolytic solution.

The rigidity of the electrolytic solution used in the liquid-based lithium-ion secondary battery is zero. In this regard, the lithium-ion secondary battery using the gel-type polymer-based solid electrolyte is different from the conventional liquid-based lithium-ion secondary battery and corresponds to the all-solid-state lithium-ion battery of the present invention.

In the gel-type polymer-based solid electrolyte, the proportion of the polymer compound contained in the solid electrolyte layer is preferably 1 mass% or more and 50 mass% or less.

Two or more types of solid electrolytes can be used in combination as long as the effects of the invention are not impaired.

(Conductive material)

As the conductive material that the positive electrode active material layer 111 may contain, a carbon material or a metal compound can be used. Examples of carbon materials include graphite powder, carbon black (for example, acetylene black), and fibrous carbon materials.

Since carbon black is fine and has a large surface area, when an appropriate amount thereof is added to the positive electrode active material layer 111, the conductivity inside the positive electrode 110 can be improved, and charging and discharging efficiency and output characteristics can be improved.

On the other hand, when the amount of carbon black added is too large, the binding force between the positive electrode active material layer 111 and the positive electrode current collector 112 and the binding force inside the positive electrode active material layer 111 both decrease, which causes an increase in internal resistance. Examples of metal compounds include metals, metal alloys and metal oxides having electrical conductivity.

In the case of a carbon material, the proportion of the conductive material in the positive electrode active material layer 111 with respect to 100 parts by mass of the positive electrode active material is preferably 5 parts by mass or more and 20 parts by mass or less. When a fibrous carbon material such as graphitized carbon fibers or carbon nanotubes is used as the conductive material, the proportion thereof can be reduced.

(Binder)

When the positive electrode active material layer 111 contains a binder, a thermoplastic resin can be used as the binder. Examples of thermoplastic resins include a polyimide resin, a fluororesin, a polyolefin resin, and ethyl cellulose.

Examples of fluororesins include polyvinylidene fluoride, polytetrafluoroethylene, tetrafluoroethylene-propylene hexafluoride/vinylidene fluoride-based copolymers, propylene hexafluoride/vinylidene fluoride-based copolymers, and tetrafluoroethylene/perfluorovinyl ether-based copolymers.

Hereinafter, polyvinylidene fluoride may be referred to as PVdF. In addition, polytetrafluoroethylene may be referred to as PTFE.

Examples of polyolefin resins include polyethylene and polypropylene.

A mixture of two or more types of these thermoplastic resins may be used. When a fluororesin and a polyolefin resin are used as the binder, the proportion of the fluororesin with respect to the entire positive electrode active material layer 111 is set to 1 mass% or more and 10 mass% or less, and the proportion of the polyolefin resin is set to 0.1 mass% or more and 2 mass% or less, the positive electrode active material layer 111 has both a high adhesive force between the positive electrode active material layer 111 and the positive electrode current collector 112 and a high bonding force inside the positive electrode active material layer 111.

The positive electrode active material layer 111 may be previously processed as a sheet-like molded article containing a positive electrode active material, and used as an "electrode" in the present invention. In addition, in the following description, such a sheet-like molded article may be referred to as a "positive electrode active material sheet." A laminate in which a current collector is laminated on the positive electrode active material sheet may be used as an electrode.

The positive electrode active material sheet may contain at least one selected from the group consisting of the above solid electrolytes, conductive materials and binders.

The positive electrode active material sheet can be obtained, for example, by preparing a slurry by mixing a positive electrode active material, a sintering additive, the above conductive material, the above binder, a plasticizer, and a solvent, applying the obtained slurry onto a carrier film, and drying it.

Examples of sintering additives include $Li_3BO_3$ and $Al_2O_3$.

As the plasticizer, for example, dioctyl phthalate can be used.

As the solvent, for example, acetone, ethanol, or N-methyl-2-pyrrolidone can be used.

When a slurry is prepared, mixing can be performed using a ball mill. Since the obtained mixture contains air bubbles mixed into during mixing in many cases, defoaming may be performed by decompression. When defoaming is performed, a part of the solvent volatilizes and concentrates, and thus the slurry becomes highly viscous.

The slurry can be applied using a known doctor blade.

As the carrier film, a PET film can be used.

The positive electrode active material sheet obtained after drying is peeled off from the carrier film, and appropriately processed into a required shape by punching and used. In addition, the positive electrode active material sheet may be appropriately uniaxially pressed in the thickness direction.

(Positive electrode current collector)

As the positive electrode current collector 112 included in the positive electrode 110, a sheet-like member made of a metal material such as Al, Ni, stainless steel, or Au as a forming material can be used. Among these, preferably, Al is used as a forming material and processed into a thin film because it is easy to process and inexpensive.

As a method of supporting the positive electrode active material layer 111 on the positive electrode current collector 112, a method of press-molding the positive electrode active material layer 111 on the positive electrode current collector 112 are exemplary examples. For press-molding, cold pressing or hot pressing can be used.

In addition, a mixture of the positive electrode active material, the solid electrolyte, the conductive material, and the binder is made into a paste using an organic solvent to form a positive electrode mixture, the obtained positive electrode mixture is applied to at least one side of the positive electrode current collector 112 and dried, and pressing and fixing may be performed to support the positive electrode active material layer 111 on the positive electrode current collector 112.

In addition, a mixture of the positive electrode active material, the solid electrolyte, and the conductive material is made into a paste using an organic solvent to form a positive electrode mixture, the obtained positive electrode mixture is applied to at least one side of the positive electrode current collector 112 and dried, and sintering may be performed to support the positive electrode active material layer 111 on the positive electrode current collector 112.

Examples of organic solvents that can be used in the positive electrode mixture include an amine solvent, an ether solvent, a ketone solvent, an ester solvent, and an amide solvent.

Examples of amine solvents include N,N-dimethylaminopropylamine and diethylenetriamine.

Examples of ether solvents include tetrahydrofuran.

Examples of ketone solvents include methyl ethyl ketone.

Examples of ester solvents include methyl acetate.

Examples of amide solvents include dimethylacetamide and N-methyl-2-pyrrolidone. Hereinafter, N-methyl-2-pyrrolidone may be referred to as NMP

Examples of methods of applying the positive electrode mixture to the positive electrode current collector 112 include a slit die coating method, a screen coating method, a curtain coating method, a knife coating method, a gravure coating method and an electrostatic spray method.

The positive electrode 110 can be produced by the method exemplified above.

(Negative electrode)

The negative electrode 120 has a negative electrode active material layer 121 and the negative electrode current collector 122. The negative electrode active material layer 121 contains a negative electrode active material. In addition, the negative electrode active material layer 121 may contain a solid electrolyte and a conductive material. As the solid electrolyte, the conductive material, and the binder, those described above can be used.

(Negative electrode active material)

As the negative electrode active material contained in the negative electrode active material layer 121, materials that can be doped and de-doped with lithium ions at a potential lower than that of the positive electrode 110, which are carbon materials, chalcogen compounds (oxides, sulfides, etc.), nitrides, metals or alloys, are exemplary examples.

Examples of carbon materials that can be used as the negative electrode active material include graphites such as natural graphite and artificial graphite, cokes, carbon black, pyrolytic carbons, carbon fibers and calcined organic polymer compound products.

Examples of oxides that can be used as the negative electrode active material include the followings.

- Silicon oxide represented by the formula $SiO_x$ (where, x is a positive real number) such as $SiO_2$ and SiO.
- Titanium oxide represented by the formula $TiO_x$ (where, x is a positive real number) such as $TiO_2$ and TiO.
- Vanadium oxide represented by the formula $VO_x$ (where, x is a positive real number) such as $V_2O_5$ and $VO_2$.
- Iron oxide represented by the formula $FeO_x$ (where, x is a positive real number) such as $Fe_3O_4$, $Fe_2O_3$, and FeO.
- Tin oxide represented by the formula $SnO_x$ (where, x is a positive real number) such as $SnO_2$ and SnO.
- Tungsten oxide represented by the general formula $WO_x$ (where, x is a positive real number) such as $WO_3$ and $WO_2$.
- Metal composite oxide containing lithium and titanium or vanadium such as $Li_4Ti_5O_{12}$ and $LiVO_2$.

Examples of sulfides that can be used as the negative electrode active material include the followings.

- Titanium sulfide represented by the formula $TiS_x$ (where, x is a positive real number) such as $Ti_2S_3$, $TiS_2$, and TiS.
- Vanadium sulfide represented by the formula $VS_x$ (where, x is a positive real number) such as $V_3S_4$, $VS_2$, and VS.
- Iron sulfide represented by the formula $FeS_x$ (where, x is a positive real number) such as $Fe_3S_4$, $FeS_2$, and FeS.
- Molybdenum sulfide represented by the formula $MoS_x$ (where, x is a positive real number) such as $Mo_2S_3$ and $MoS_2$.
- Tin sulfide represented by the formula $SnS_x$ (where, x is a positive real number) such as $SnS_2$ and SnS.
- Tungsten sulfide represented by the formula $WS_x$ (where, x is a positive real number) such as $WS_2$.
- Antimony sulfide represented by the formula $SbS_x$ (where, x is a positive real number) such as $Sb_2S_3$.
- Selenium sulfide represented by the formula $SeS_x$ (where, x is a positive real number) such as $Se_5S_3$, $SeS_2$, and SeS.

Examples of nitrides that can be used as the negative electrode active material include lithium-containing nitrides such as $Li_3N$ and $Li_{3-x}A_xN$ (where, A is one or both of Ni and Co, and 0<x<3).

These carbon materials, oxides, sulfides, and nitrides may be used alone or two or more thereof may be used in combination. In addition, these carbon materials, oxides, sulfides, and nitrides may be crystalline or amorphous.

In addition, examples of metals that can be used as the negative electrode active material include lithium metals, silicon metals and tin metals.

Examples of alloys that can be used as the negative electrode active material include lithium alloys, silicon alloys, tin alloys, and alloys such as $Cu_2Sb$ and $La_3Ni_2Sn_7$.

Examples of lithium alloys include Li-Al, Li-Ni, Li-Si, Li-Sn, and Li-Sn-Ni.

Examples of silicon alloys include Si-Zn.

Examples of tin alloys include Sn-Mn, Sn-Co, Sn-Ni, Sn-Cu, and Sn-La.

For example, these metals and alloys are mainly used as electrodes alone after being processed into a foil shape.

Among the above negative electrode active material, a carbon material containing graphite such as natural graphite and artificial graphite as a main component is preferably used. This is because the potential of the negative electrode 120 hardly changes from the uncharged state to the fully charged state during charging (the potential flatness is favorable), the average discharging potential is low, and the capacity retention rate when charging and discharging are repeatedly performed is high (cycle characteristics are favorable).

The shape of the carbon material may be, for example, any of a flaky shape such as natural graphite, a spherical shape such as mesocarbon microbeads, a fiber shape such as graphitized carbon fibers and a fine powder aggregate.

In addition, among the above negative electrode active materials, an oxide can be suitably used because it has high thermal stability and dendrites (dendritic crystals) due to Li metal are unlikely to be generated. As the shape of the oxide, for example, a fiber shape or a fine powder aggregate is preferably used.

(Negative electrode current collector)

As the negative electrode current collector 122 included in the negative electrode 120, a strip-like member made of a metal material such as Cu, Ni, or stainless steel as a forming material is an exemplary example. Among these, preferably, Cu is used as a forming material and processed into a thin film because it is difficult to form an alloy with lithium and it is easy to process.

As a method of supporting the negative electrode active material layer 121 on the negative electrode current collector 122, as in the case of the positive electrode 110, a method of press-molding, a method of applying a paste-like negative electrode mixture containing a negative electrode active material onto the negative electrode current collector 122, performing drying and then pressing and clamping, and a method of applying a paste-like negative electrode mixture containing a negative electrode active material onto the negative electrode current collector 122, performing drying and then sintering is an exemplary example.

(Solid electrolyte layer)

The solid electrolyte layer 130 contains the above solid electrolyte (first solid electrolyte). When the positive electrode active material layer 111 contains a solid electrolyte, the solid electrolyte (first solid electrolyte) constituting the solid electrolyte layer 130 and the solid electrolyte (second solid electrolyte) contained in the positive electrode active material layer 111 may be the same substance. The solid electrolyte layer 130 functions as a medium for transmitting lithium ions, and also functions as a separator that separates the positive electrode 110 and the negative electrode 120 and prevents short circuiting between them.

The solid electrolyte layer 130 can be formed by depositing an inorganic solid electrolyte on the surface of the positive electrode active material layer 111 included in the above positive electrode 110 by a sputtering method.

In addition, the solid electrolyte layer 130 can be formed by applying a paste-like mixture containing a solid electrolyte to the surface of the positive electrode active material layer 111 included in the above positive electrode 110 and performing drying. After drying, press-mold is performed, additionally pressing is performed by cold isostatic pressing (CIP), and thus the solid electrolyte layer 130 may be formed.

In addition, the solid electrolyte layer 130 can be formed by forming a solid electrolyte in a pellet form in advance, laminating the solid electrolyte pellet and the above positive electrode active material sheet, and performing uniaxial pressing in the lamination direction. The positive electrode active material sheet serves as the positive electrode active material layer 111.

With respect to the obtained laminate of the positive electrode active material layer 111 and the solid electrolyte layer 130, the positive electrode current collector 112 is additionally arranged on the positive electrode active material layer 111. When uniaxial pressing performed in the lamination direction and sintering is additionally performed, the solid electrolyte layer 130 and the positive electrode 110 can be formed.

Such a positive electrode 110 is in contact with the solid electrolyte layer 130. The solid electrolyte layer 130 contains a first solid electrolyte.

The positive electrode 110 has the positive electrode active material layer 111 in contact with the solid electrolyte layer 130 and the positive electrode current collector 112 on which the positive electrode active material layer 111 is laminated. The positive electrode active material layer 111 contains a plurality of particles containing crystals of a lithium metal composite oxide (that is, positive electrode active material which is one aspect of the present invention), and a solid electrolyte (second solid electrolyte) that is filled between the plurality of particles and in contact with the particles.

The solid electrolyte and particles contained in the positive electrode active material layer 111 each are in contact with the solid electrolyte layer 130. That is, the particles contained in the positive electrode active material layer 111 are in contact with the solid electrolyte contained in the positive electrode active material layer 111 and the solid electrolyte layer 130.

Here, it is not necessary for all particles (positive electrode active material) contained in the positive electrode active material layer 111 to be in contact with the solid electrolyte contained in the positive electrode active material layer 111 and the solid electrolyte layer 130.

When the positive electrode active material contained in the positive electrode active material layer 111 comes into contact with the solid electrolyte contained in the positive electrode active material layer 111, it conducts electricity with the solid electrolyte contained in the positive electrode active material layer 111. In addition, when the positive electrode active material contained in the positive electrode active material layer 111 comes into contact with the solid electrolyte layer 130, it conducts electricity with the solid electrolyte layer 130. In addition, when the solid electrolyte contained in the positive electrode active material layer 111 comes into contact with the solid electrolyte layer 130, it conducts electricity with the solid electrolyte layer 130.

Thereby, the positive electrode active material contained in the positive electrode active material layer 111 directly or indirectly conducts electricity with the solid electrolyte layer 130.

The laminate 100 can be produced by laminating the negative electrode 120 on the solid electrolyte layer 130 provided on the positive electrode 110 as described above in a manner in which a negative electrode electrolyte layer 121 is in contact with the surface of the solid electrolyte layer 130 using a known method. Thereby, the solid electrolyte layer 130 comes into contact with the negative electrode active material layer 121 and conducts electricity.

As described above, the obtained all-solid-state lithium-ion battery 1000 in which the solid electrolyte layer 130 is brought into contact with the positive electrode 110 and the negative electrode 120 so that short circuiting is not caused between the positive electrode 110 and the negative electrode 120 is provided. The provided all-solid-state lithium-ion battery 1000 is connected to an external power supply and charged by applying a negative potential to the positive electrode 110 and a positive potential to the negative electrode 120.

In addition, the charged all-solid-state lithium-ion battery 1000 is discharged by connecting a discharge circuit to the positive electrode 110 and the negative electrode 120, and applying a current to the discharge circuit.

According to the positive electrode active material for an all-solid-state lithium-ion battery having the above configuration, it is possible to smoothly exchange lithium ions with the solid electrolyte in the positive electrode, and it is possible to improve battery performance such as inhibition of overvoltage.

According to the electrode having the above configuration, since the above positive electrode active material for an all-solid-state lithium-ion battery is provided, it is possible to improve battery performance such as inhibition of overvoltage of the all-solid-state lithium-ion battery.

According to the all-solid-state lithium-ion battery having the above configuration, since the above positive electrode active material for an all-solid-state lithium-ion battery is provided, it is possible to inhibit overvoltage.

As one aspect, the present invention also includes the following embodiments. Here, a "positive electrode active material T" to be described below indicates "a positive electrode active material composed of particles containing crystals of a lithium metal composite oxide, wherein the lithium metal composite oxide has a layered structure and contains at least Li and a transition metal, and the total pore volume A is less than 0.0035 cm$^3$/g."

(2-1) A use of a positive electrode active material T for an all-solid-state lithium-ion battery.

(2-2) A use of a positive electrode active material T for a positive electrode of an all-solid-state lithium-ion battery.

(2-3) A use of a positive electrode active material T for producing an all-solid-state lithium-ion battery.

(2-4) A use of a positive electrode active material T for producing a positive electrode of an all-solid-state lithium-ion battery.

(2-A) The use according to any one of (2-1) to (2-4), wherein the all-solid-state lithium-ion battery contains an oxide-based solid electrolyte as a solid electrolyte.

(3-1) A positive electrode active material T that is in contact with a solid electrolyte layer.

(3-1-1) The positive electrode active material T according to (3-1), wherein the solid electrolyte layer contains an oxide-based solid electrolyte.

(3-2) A positive electrode that is in contact with a solid electrolyte layer, wherein the positive electrode has a positive electrode active material layer in contact with the solid electrolyte layer and a current collector on which the positive electrode active material layer is laminated, and the positive electrode active material layer contains a positive electrode active material T.

(3-3) A positive electrode that is in contact with a solid electrolyte layer, wherein the positive electrode has a positive electrode active material layer in contact with the solid electrolyte layer and a current collector on which the positive electrode active material layer is laminated, wherein the positive electrode active material layer contains a positive electrode active material T and a solid electrolyte, wherein the positive electrode active material T contains a plurality of particles, and the solid electrolyte is filled between the plurality of particles and in contact with the particles.

(3-4) The positive electrode according to (3-3), wherein the solid electrolytes and the particles contained in the positive electrode active material layer each are in contact with the solid electrolyte layer.

(3-A) The positive electrode according to (3-2), (3-3) or (3-4), wherein the solid electrolyte layer contains an oxide-based solid electrolyte.

(3-B) The positive electrode according to (3-2), (3-3), (3-4) or (3-A), wherein the solid electrolyte contained in the positive electrode active material layer is an oxide-based solid electrolyte.

(3-5) An all-solid-state lithium-ion battery including the positive electrode active material T according to (3-1) or (3-1-1) or the positive electrode according to any one of (3-2), (3-3), (3-4), (3-A), and (3-B).

(4-1) A method of charging an all-solid-state lithium-ion battery, including providing a solid electrolyte layer in contact with a positive electrode and a negative electrode so that short-circuiting is not caused between the positive electrode and the negative electrode, and applying a negative potential to the positive electrode and a positive potential to the negative electrode by an external power supply, wherein the positive electrode contains a positive electrode active material T.

(4-2) A method of discharging an all-solid-state lithium-ion battery, including providing a solid electrolyte layer in contact with a positive electrode and a negative electrode so that short-circuiting is not caused between the positive electrode and the negative electrode, charging an all-solid-state lithium-ion battery by applying a negative potential to the positive electrode and a positive potential to the negative electrode by an external power supply, and connecting a discharge circuit to the positive electrode and the negative electrode of the charged all-solid-state lithium-ion battery, wherein the positive electrode contains a positive electrode active material T.

(4-A) The method of charging an all-solid-state lithium-ion battery according to (4-1) or the method of discharging an all-solid-state lithium-ion battery according to (4-2), wherein the solid electrolyte layer contains an oxide-based solid electrolyte.

While preferable embodiments of the present invention have been described above with reference to the appended drawings, the present invention is not limited to the examples. Various shapes, combinations and the like of constituent members in the above examples are examples, and various modifications can be made based on design requirements and the like without departing from the spirit and scope of the present invention.

[Examples]

Hereinafter, the present invention will be described with reference to examples, but the present invention is not limited to these examples.

<Composition analysis of positive electrode active material>

Composition analysis of the positive electrode active material produced by the method to be described below was performed by the method described in the above <Composition analysis>. Here, the composition of the lithium metal composite oxide was a composition in which composition analysis of the positive electrode active material was performed and the obtained analysis result corresponded to Composition Formula (A). That is, the values of x, y, z, and w obtained from the positive electrode active material to be described below were regarded as the values of x, y, z, and w of the lithium metal composite oxide.

<Measurement of nitrogen adsorption isotherm and nitrogen desorption isotherm at liquid nitrogen temperature>

A total pore volume A of the positive electrode active material produced by a method to be described below, which was obtained from the nitrogen adsorption amount when the relative pressure (p/po) was 0.99, was obtained by the nitrogen adsorption method and the nitrogen desorption method.

10 g of the positive electrode active material was vacuum-degassed at 150°C for 8 hours using a vacuum heat treatment device (BELSORP VAC II commercially available from MicrotracBel Corp.).

After the treatment, using a measuring device (BELSORP mini commercially available from MicrotracBel Corp.), the nitrogen adsorption isotherm and desorption isotherm of the lithium metal composite oxide at a liquid nitrogen temperature (77K) were measured.

The nitrogen adsorption amount per unit weight of the lithium metal composite oxide on the adsorption isotherm and the desorption isotherm was calculated so that it was represented by the volume of nitrogen gas in a standard state (STP; Standard Temperature and Pressure).

The total pore volume A was calculated by the following calculation formula using the nitrogen adsorption amount at a relative pressure ($p/p_0=0.99$) of the adsorption isotherm and the desorption isotherm as $V cm^3$ (STP)/g.

In the following formula, the volume of 1 mol of a gas in a standard state was 22,414 $cm^3$, the molecular weight M of nitrogen was 28.013 g/mol, and the density $\rho$ of nitrogen in a liquid phase state was 0.808 $g/cm^3$.

$$\text{Total pore volume } A(cm^3/g) = V/22414 \times M/\rho$$

In addition, the adsorption isotherm and the desorption isotherm were analyzed by the BJH method, and in a range of a pore diameter of 200 nm or less, a cumulative curve of a log differential pore volume for each pore diameter and a pore volume for each pore diameter was obtained. From the cumulative curve of the pore volume, a proportion of the volume of pores having a pore diameter of 50 nm or less with respect to a total pore volume of pores having a pore diameter of 200 nm or less (proportion of pores of 50 nm or less) was obtained.

<Measurement of physical properties by mercury intrusion porosimetry >

Measurement of physical properties by a mercury intrusion porosimetry was performed by the method described in the above <Mercury intrusion porosimetry>, and $D_{75}$ and $D_5$ were obtained.

<Method of confirming particle shape>

The shape of particles contained in the positive electrode active material was confirmed by the method described in the above <Method of confirming particle shape>. When the positive electrode active material contained single particles, the content thereof was measured by the above <Method of measuring amount of single particles>.

<Method of confirming crystal structure>

The crystal structure of the lithium metal composite oxide contained in the positive electrode active material was confirmed by the above <Method of confirming crystal structure>.

<Example 1>

(Production of positive electrode active material 1)

Water was put into the reaction chamber including a stirrer and an overflow pipe, and a sodium hydroxide aqueous solution was then added thereto, and the liquid temperature was maintained at 50°C.
A nickel sulfate aqueous solution, a cobalt sulfate aqueous solution, and a manganese sulfate aqueous solution were mixed at a ratio (atomic ratio) of Ni, Co, and Mn of 0.50:0.20:0.30 to prepare a mixed raw material liquid 1.
Next, in the reaction chamber, with stirring, the mixed raw material liquid 1 was continuously added with an ammonium sulfate aqueous solution as a complexing agent, and nitrogen gas was continuously aerated in the reaction chamber. A sodium hydroxide aqueous solution was timely added dropwise so that the pH of the solution in the reaction chamber was 11.1 (pH value when the liquid temperature of the aqueous solution was 40°C), and thereby nickel cobalt manganese composite hydroxide particles were obtained.
The nickel cobalt manganese composite hydroxide particle was washed and then dehydrated in a centrifuge, and isolation was performed and drying was performed at 120°C to obtain a nickel cobalt manganese composite hydroxide 1.
The nickel cobalt manganese composite hydroxide 1 and a lithium hydroxide powder were weighed out and mixed at a ratio (molar ratio) of Li/(Ni+Co+Mn)=1.05 to obtain a mixture 1.
Then, the obtained mixture 1 was calcined under an air atmosphere at 970°C for 4 hours.
Then, the mixture was cooled to room temperature, and vacuum-drying was additionally performed at 120°C for 10 hours to obtain a positive electrode active material 1.

(Evaluation of positive electrode active material 1)

When the composition of the positive electrode active material 1 was analyzed and made to correspond to Composition Formula (A), x=0.05, y=0.20, z=0.30, w=0. The composition ratio of the positive electrode active material was the same as the preparation ratio of Ni:Co:Mn=0.50:0.20:0.30. Therefore, theoretically, the composition of the positive electrode active material 1 was x=0.05, y=0.20, z=0.30, w=0.
As a result of SEM observation of the positive electrode active material 1, primary particles and secondary particles were contained and single particles were not contained.
The total pore volume A of the positive electrode active material 1 was 0.0009 $cm^3/g$, and a proportion of pores of 50 nm or less was 50.2%. In addition, $D_{75}$ of the positive electrode active material 1 was 2.606 $\mu$m, and $D_5$ was 0.0138 $\mu$m. In addition, the crystal structure of the lithium metal composite oxide in the positive electrode active material 1 was a hexagonal layered crystal structure belonging to the space group R-3m.

<Example 2>

(Production of positive electrode active material 2)

Water was put into the reaction chamber including a stirrer and an overflow pipe, and a sodium hydroxide aqueous solution was then added thereto, and the liquid temperature was maintained at 50°C.
A nickel sulfate aqueous solution, a cobalt sulfate aqueous solution, and a manganese sulfate aqueous solution were mixed at a ratio (atomic ratio) of Ni, Co and Mn of 0.55:0.20:0.25 to prepare a mixed raw material liquid 2.
Next, in the reaction chamber, with stirring, the mixed raw material liquid 2 was continuously added with an ammonium sulfate aqueous solution as a complexing agent. A sodium hydroxide aqueous solution was timely added dropwise so that the pH of the solution in the reaction chamber was 12.0 (the pH value when the liquid temperature of the aqueous solution was 40°C), and thereby nickel cobalt manganese composite hydroxide particles were obtained.
The obtained nickel cobalt manganese composite hydroxide particles were washed and then dehydrated in a centrifuge, and isolation was performed and drying was performed at 120°C to obtain a nickel cobalt manganese composite hydroxide 2.
The nickel cobalt manganese composite hydroxide 2 and a lithium hydroxide monohydrate powder were weighed out and mixed at a ratio (molar ratio) of Li/(Ni+Co+Mn)=1.03 to obtain a mixture 2.
Then, the obtained mixture 2 was primary-calcined under an oxygen atmosphere at 650°C for 5 hours.

Next, the mixture was secondary-calcined under an oxygen atmosphere at 960°C for 5 hours to obtain a secondary calcined article.

The obtained secondary calcined article was crushed with a pin mill type crusher to obtain a crushed product 1.

The operating conditions of the pin mill type crusher and the device used are as follows.

(Operating conditions of pin mill type crusher)

Device used: Impact Mill AVIS 100 (commercially available from Millsystem Co., Ltd.)
Rotation speed: 16,000 rpm, supply speed: 8 kg/hour

The obtained crushed product 1 was additionally calcined under an air atmosphere at 400°C for 5 hours to obtain a lithium metal composite oxide. The obtained lithium metal composite oxide was used as the positive electrode active material 2.

(Evaluation of positive electrode active material 2)

When the composition of the positive electrode active material 2 was analyzed and made to correspond to Composition Formula (A), x=0.03, y=0.20, z=0.25, w=0.

As a result of SEM observation of the positive electrode active material 2, single particles were contained. (content: 90% or more)

The total pore volume A of the positive electrode active material 2 was 0.0019 $cm^3/g$, and the proportion of pores of 50 nm or less was 55.0%. $D_{75}$ of the positive electrode active material 2 was 7.288 $\mu$m, and $D_5$ was 0.0268 $\mu$m. In addition, the crystal structure of the lithium metal composite oxide in the positive electrode active material 2 was a hexagonal layered crystal structure belonging to the space group R-3m.

<Comparative Example 1>

(Production of positive electrode active material 3)

A commercial product $LiCoO_2$ was evaluated as the positive electrode active material 3. As the positive electrode active material 3, a commercial product $LiCoO_2$ (product name: LCO commercially available from Toyoshima & Co., Ltd.) was used.

(Evaluation of positive electrode active material 3)

As a result of SEM observation of the positive electrode active material 3, single particles were contained. (content: 100%)

The total pore volume A of the positive electrode active material 3 was 0.0044 $cm^3/g$, and the proportion of pores of 50 nm or less was 41.9%%. $D_{75}$ of the positive electrode active material 3 was 7.485 $\mu$m, and $D_5$ was 0.0118 $\mu$m.

<Comparative Example 2>

(Production of positive electrode active material 4)

Water was put into the reaction chamber including a stirrer and an overflow pipe, and a sodium hydroxide aqueous solution was then added thereto, and the liquid temperature was maintained at 50°C.

A nickel sulfate aqueous solution, a cobalt sulfate aqueous solution, and a manganese sulfate aqueous solution were mixed at a ratio (atomic ratio) of Ni, Co and Mn of 0.58:0.20:0.22 to prepare a mixed raw material liquid 4.

Next, in the reaction chamber, with stirring, the mixed raw material liquid 4 was continuously added with an ammonium sulfate aqueous solution as a complexing agent. A sodium hydroxide aqueous solution was timely added dropwise so that the pH of the solution in the reaction chamber was 12.1 (when the liquid temperature of the aqueous solution was 40°C), and thereby nickel cobalt manganese composite hydroxide particles were obtained.

The obtained nickel cobalt manganese composite hydroxide particles were washed and then dehydrated in a centrifuge, and isolation was performed and drying was performed at 105°C for 20 hours to obtain a nickel cobalt manganese composite hydroxide 4.

The nickel cobalt manganese composite hydroxide 4 and a lithium hydroxide monohydrate powder were weighed out and mixed at a ratio (molar ratio) of Li/(Ni+Co+Mn)=1.03 to obtain a mixture 4.

Then, the mixture 4 was primary-calcined under an oxygen atmosphere at 650°C for 5 hours.

Next, secondary-calcining was performed under an oxygen atmosphere at 850°C for 5 hours to obtain a secondary calcined article.

The obtained secondary calcined article was crushed with a pin mill type crusher to obtain a crushed product 2. The operating conditions of the pin mill type crusher and the device used are as follows.

(Operating conditions of pin mill type crusher)

Device used: Impact Mill AVIS 100 (commercially available from Millsystem Co., Ltd.)
Rotation speed: 16,000 rpm, supply speed: 8 kg/hour

The obtained crushed product 2 was sieved with Turbo Screener to obtain a positive electrode active material 4. The operation conditions and sieving conditions of Turbo Screener are as follows.

[Operation conditions and sieving conditions of Turbo Screener]

The obtained crushed product 2 was sieved with Turbo Screener (TS125×200 type, commercially available from Freund Turbo Co., Ltd.). The operation conditions of Turbo Screener are as follows.

(Operation conditions of Turbo Screener)

Screen used: 45 $\mu$m mesh, blade rotation speed: 1,800 rpm, supply speed: 50 kg/hour

(Evaluation of positive electrode active material 4)

When the composition of the positive electrode active material 4 was analyzed and made to correspond to Composition Formula (A), x=0.03, y=0.20, z=0.22, w=0.

As a result of SEM observation of the positive electrode active material 4, single particles were contained (content: 90% or more).

The total pore volume A of the positive electrode active material 4 was 0.0035 cm$^3$/g, and a proportion of pores of 50 nm or less was 35.2%. $D_{75}$ of the positive electrode active material 4 was 3.543 $\mu$m, and $D_5$ was 0.0130 $\mu$m. In addition, the crystal structure of the lithium metal composite oxide in the positive electrode active material 4 was a hexagonal layered crystal structure belonging to the space group R-3m.

<Production of all-solid-state lithium-ion battery>

All-solid-state lithium-ion batteries were produced by the method described in the above <Production of all-solid-state lithium-ion battery>.

<Evaluation of overvoltage>

The voltage 30 seconds after the initial charging started was measured by the method described in the above <Evaluation of overvoltage> using the produced all-solid-state lithium-ion battery.

<Production of liquid-based lithium secondary battery>

(Production of positive electrode for lithium secondary battery)

The positive electrode active material obtained by a production method to be described below, a conductive material (acetylene black) and a binder (PVdF) were added so that the composition had a ratio of positive electrode active material:conductive material:binder=92:5:3 (mass ratio), and kneaded to prepare a paste-like positive electrode mixture. When the positive electrode mixture was prepared, NMP was used as an organic solvent.

The obtained positive electrode mixture was applied to an Al foil with a thickness of 40 $\mu$m as a current collector and vacuum-dried at 150°C for 8 hours to obtain a positive electrode for a lithium secondary battery. The electrode area of the positive electrode for a lithium secondary battery was 1.65 cm$^2$.

(Production of lithium secondary battery (coin type half cell))

The following operation was performed in an argon atmosphere glove box.

The positive electrode for a lithium secondary battery produced in (Production of positive electrode for lithium secondary battery) was placed on a lower lid of parts for a coin type battery R2032 (commercially available from Hohsen Corporation) with an aluminum foil surface facing downward, and a separator (polyethylene porous film) was placed thereon.

300 μl of an electrolytic solution was injected therein. As the electrolytic solution, a solution obtained by dissolving $LiPF_6$ at a ratio of 1.0 mol/l in a mixed solution containing ethylene carbonate, dimethyl carbonate and ethyl methyl carbonate at 30:35:35 (volume ratio) was used.

Next, using metal lithium as a negative electrode, the negative electrode was placed on the upper side of a laminate film separator, an upper lid was covered with a gasket, and caulking was performed with a caulking machine to produce a lithium secondary battery (coin type half cell R2032; hereinafter may be referred to as a "half cell").

<Measurement of overvoltage>

Using the produced half cell, the initial charging and discharging test was performed under the following conditions, and the voltage 30 seconds after charging started was measured.

<Conditions of initial charging and discharging test>

Test temperature: 25°C
Constant current constant voltage charging with a maximum charging voltage of 4.3 V, a charging time of 6 hours, a charging current of 0.2 CA, and a cutoff current of 0.05C

<Results>

Table 1 shows the total pore volume A of Examples 1 and 2 and Comparative Examples 1 and 2, the volume proportion of pores of 50 nm or less, and $D_{75}$ and $D_5$ obtained by a mercury intrusion porosimetry together.

[Table 1]

| | Total pore volume ($cm^3$/g) | Proportion of pores of 50 nm or less (%) | $D_{75}$ (μm) | $D_5$ (μm) |
|---|---|---|---|---|
| Example 1 | 0.0009 | 50.2 | 2.606 | 0.0138 |
| Example 2 | 0.0019 | 55.0 | 7.288 | 0.0268 |
| Comparative Example 1 | 0.0044 | 41.9 | 7.485 | 0.0118 |
| Comparative Example 2 | 0.0035 | 35.2 | 3.543 | 0.0130 |

Table 2 shows the voltages of the liquid-based lithium secondary batteries and all-solid-state lithium-ion batteries of Examples 1 and 2 and Comparative Examples 1 and 2 30 seconds after initial charging started.

[Table 2]

| | Voltage (V) 30 seconds after initial charging starts | |
|---|---|---|
| | Liquid LIB | All-solid-state |
| Example 1 | 3.72 | 3.59 |
| Example 2 | 3.72 | 3.64 |
| Comparative Example 1 | 3.39 | 3.91 |
| Comparative Example 2 | 3.66 | 3.98 |

In the evaluation results, in all of the all-solid-state lithium-ion batteries using the positive electrode active materials of Examples 1 and 2, the value of the voltage 30 seconds after initial charging started was small, and the voltage rise (overvoltage) after initial charging started was reduced.

As described above, it has been found that the present invention is beneficial.

[Reference Signs List]

100 Laminate
110 Positive electrode
111 Positive electrode active material layer
112 Positive electrode current collector
113 External terminal
120 Negative electrode
121 Negative electrode electrolyte layer
122 Negative electrode current collector
123 External terminal
130 Solid electrolyte layer
200 Exterior body
200a Opening
1000 All-solid-state lithium-ion battery

**Claims**

1. A positive electrode active material for an all-solid-state lithium-ion battery composed of particles containing crystals of a lithium metal composite oxide,

   wherein the lithium metal composite oxide has a layered structure and contains at least Li and a transition metal, and

   wherein, in pore physical properties obtained from nitrogen adsorption isotherm measurement and nitrogen desorption isotherm measurement at a liquid nitrogen temperature, a total pore volume obtained from a nitrogen adsorption amount when a relative pressure (p/po) of an adsorption isotherm is 0.99 is less than 0.0035 $cm^3$/g.

2. The positive electrode active material for an all-solid-state lithium-ion battery according to claim 1, which is used for an all-solid-state lithium-ion battery containing an oxide-based solid electrolyte.

3. The positive electrode active material for an all-solid-state lithium-ion battery according to claim 1 or 2, which is in contact with a solid electrolyte layer.

4. The positive electrode active material for an all-solid-state lithium-ion battery according to any one of claims 1 to 3, wherein, in a pore distribution obtained from a desorption isotherm by a Barrett-Joyner-Halenda (BJH) method, a proportion of the volume of pores having a pore diameter of 50 nm or less with respect to a total pore volume of pores having a pore diameter of 200 nm or less is 45% or more.

5. The positive electrode active material for an all-solid-state lithium-ion battery according to any one of claims 1 to 4, wherein, in a cumulative pore distribution curve obtained by a mercury intrusion porosimetry, the pore diameter $D_{75}$ at a cumulative 25% is 7.4 $\mu$m or less, and the pore diameter $D_5$ at a cumulative 95% is 0.0135 $\mu$m or more.

6. The positive electrode active material for an all-solid-state lithium-ion battery according to any one of claims 1 to 5, wherein the transition metal is at least one element selected from the group consisting of Ni, Co, Mn, Ti, Fe, V and W.

7. The positive electrode active material for an all-solid-state lithium-ion battery according to claim 6, wherein the lithium metal composite oxide is represented by the following Composition Formula (A):

$$Li[Li_x(Ni_{(1-y-z-w)}Co_yMn_zM_w)_{1-x}]O_2 \qquad \text{Composition Formula (A)}$$

(where, M is at least one element selected from the group consisting of Fe, Cu, Ti, Mg, Al, W, B, Mo, Nb, Zn, Sn, Zr, Ga and V, and -0.10≤x≤0.30, 0≤y≤0.40, 0≤z≤0.40, 0≤w≤0.10, and 0<y+z+w are satisfied).

8. The positive electrode active material for an all-solid-state lithium-ion battery according to claim 7, wherein, in Composition Formula (A), $1-y-z-w \geq 0.50$ and $y \leq 0.30$ are satisfied.

9. The positive electrode active material for an all-solid-state lithium-ion battery according to any one of claims 1 to 8,

   wherein the particles are composed of primary particles, secondary particles which are aggregates of the primary particles, and single particles that exist independently of the primary particles and the secondary particles, and wherein the amount of the single particles in the particles is 20% or more.

10. An electrode comprising the positive electrode active material for an all-solid-state lithium-ion battery according to any one of claims 1 to 9.

11. The electrode according to claim 10, further comprising a solid electrolyte.

12. An all-solid-state lithium-ion battery comprising a positive electrode, a negative electrode, and a solid electrolyte layer interposed between the positive electrode and the negative electrode,

   wherein the solid electrolyte layer contains a first solid electrolyte,
   wherein the positive electrode has a positive electrode active material layer in contact with the solid electrolyte layer and a current collector on which the positive electrode active material layer is laminated, and
   wherein the positive electrode active material layer contains the positive electrode active material for an all-solid-state lithium-ion battery according to any one of claims 1 to 9.

13. The all-solid-state lithium-ion battery according to claim 12, wherein the positive electrode active material layer contains the positive electrode active material for an all-solid-state lithium-ion battery and a second solid electrolyte.

14. The all-solid-state lithium-ion battery according to claim 13, wherein the first solid electrolyte and the second solid electrolyte are the same substance.

15. The all-solid-state lithium-ion battery according to any one of claims 12 to 14, wherein the first solid electrolyte has an amorphous structure.

16. The all-solid-state lithium-ion battery according to any one of claims 12 to 15, wherein the first solid electrolyte is an oxide-based solid electrolyte.

17. A positive electrode that is in contact with a solid electrolyte layer, wherein the positive electrode has a positive electrode active material layer in contact with the solid electrolyte layer and a current collector on which the positive electrode active material layer is laminated,

   wherein the positive electrode active material layer contains a positive electrode active material composed of particles containing crystals of a lithium metal composite oxide,
   wherein the lithium metal composite oxide has a layered structure and contains at least Li and a transition metal, and
   wherein, in the positive electrode active material, in pore physical properties obtained from nitrogen adsorption isotherm measurement and nitrogen desorption isotherm measurement at a liquid nitrogen temperature, a total pore volume obtained from a nitrogen adsorption amount when a relative pressure (p/po) of an adsorption isotherm is 0.99 is less than 0.0035 cm$^3$/g.

18. A use of a positive electrode active material composed of particles containing crystals of a lithium metal composite oxide for an all-solid-state lithium-ion battery,

   wherein the lithium metal composite oxide has a layered structure and contains at least Li and a transition metal, and
   wherein, in the positive electrode active material, in pore physical properties obtained from nitrogen adsorption isotherm measurement and nitrogen desorption isotherm measurement at a liquid nitrogen temperature, a total pore volume obtained from a nitrogen adsorption amount when a relative pressure (p/po) of an adsorption isotherm is 0.99 is less than 0.0035 cm$^3$/g.

**19.** A use of a positive electrode active material composed of particles containing crystals of a lithium metal composite oxide for a positive electrode of an all-solid-state lithium-ion battery,

wherein the lithium metal composite oxide has a layered structure and contains at least Li and a transition metal, wherein, in the positive electrode active material, in pore physical properties obtained from nitrogen adsorption isotherm measurement and nitrogen desorption isotherm measurement at a liquid nitrogen temperature, a total pore volume obtained from a nitrogen adsorption amount when a relative pressure (p/po) of an adsorption isotherm is 0.99 is less than 0.0035 $cm^3$/g.

**20.** A method of charging an all-solid-state lithium-ion battery, comprising providing a solid electrolyte layer in contact with a positive electrode and a negative electrode so that short-circuiting is not caused between the positive electrode and the negative electrode, and applying a negative potential to the positive electrode and a positive potential to the negative electrode by an external power supply,

wherein the positive electrode contains a positive electrode active material composed of particles containing crystals of a lithium metal composite oxide, wherein the lithium metal composite oxide has a layered structure and contains at least Li and a transition metal, and wherein, in the positive electrode active material, in pore physical properties obtained from nitrogen adsorption isotherm measurement and nitrogen desorption isotherm measurement at a liquid nitrogen temperature, a total pore volume obtained from a nitrogen adsorption amount when a relative pressure (p/$p_0$) of an adsorption isotherm is 0.99 is less than 0.0035 $cm^3$/g.

FIG. 1

FIG. 2

| | INTERNATIONAL SEARCH REPORT | | International application No. |
|---|---|---|---|
| | | | PCT/JP2021/001219 |

**A. CLASSIFICATION OF SUBJECT MATTER**

H01M 4/131(2010.01)i; H01M 4/36(2006.01)i; H01M 4/505(2010.01)i; H01M 4/525(2010.01)i; H01M 10/052(2010.01)i; H01M 10/0562(2010.01)i

FI: H01M4/525; H01M4/505; H01M10/0562; H01M10/052; H01M4/131; H01M4/36 C

According to International Patent Classification (IPC) or to both national classification and IPC

**B. FIELDS SEARCHED**

Minimum documentation searched (classification system followed by classification symbols)

H01M4/131; H01M4/36; H01M4/505; H01M4/525; H01M10/052; H01M10/0562

Documentation searched other than minimum documentation to the extent that such documents are included in the fields searched

| Published examined utility model applications of Japan | 1922–1996 |
| Published unexamined utility model applications of Japan | 1971–2021 |
| Registered utility model specifications of Japan | 1996–2021 |
| Published registered utility model applications of Japan | 1994–2021 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2017-4635 A (PRIMEEARTH EV ENERGY CO., LTD.) 05 January 2017 (2017-01-05) | 1-20 |
| A | JP 2003-51308 A (YUASA CORPORATION) 21 February 2003 (2003-02-21) | 1-20 |
| A | WO 2019/187953 A1 (SUMITOMO CHEMICAL CO., LTD.) 03 October 2019 (2019-10-03) | 1-20 |

☐ Further documents are listed in the continuation of Box C.    ☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 05 March 2021 (05.03.2021) | 16 March 2021 (16.03.2021) |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

International application No.

PCT/JP2021/001219

| Patent Documents referred in the Report | Publication Date | Patent Family | Publication Date |
|---|---|---|---|
| JP 2017-4635 A | 05 Jan. 2017 | (Family: none) | |
| JP 2003-51308 A | 21 Feb. 2003 | (Family: none) | |
| WO 2019/187953 A1 | 03 Oct. 2019 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020006341 A
- JP 2018014317 A
- JP 2002201028 A
- JP 6734491 B